(19) Europäisches Patentamt
European Patent Office
Office européen des brevets

(11) EP 4 681 816 A1

(12) **EUROPEAN PATENT APPLICATION**
published in accordance with Art. 153(4) EPC

(43) Date of publication:
21.01.2026 Bulletin 2026/04

(21) Application number: 24774684.5

(22) Date of filing: 06.03.2024

(51) International Patent Classification (IPC):
$B01J\ 23/63^{(2006.01)}$     $B01D\ 53/94^{(2006.01)}$
$B01J\ 35/57^{(2024.01)}$     $F01N\ 3/10^{(2006.01)}$
$F01N\ 3/28^{(2006.01)}$

(52) Cooperative Patent Classification (CPC):
B01D 53/94; B01J 23/63; B01J 35/57; F01N 3/10;
F01N 3/28

(86) International application number:
PCT/JP2024/008535

(87) International publication number:
WO 2024/195544 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.03.2023 JP 2023043249

(71) Applicant: Mitsui Kinzoku Company, Limited
Tokyo (JP)

(72) Inventors:
• MORIYAMA, Naoki
Ageo-shi, Saitama 362-0025 (JP)
• IWASHINA, Katsuya
Ageo-shi, Saitama 362-0025 (JP)
• KURAMOCHI, Satoru
Ageo-shi, Saitama 362-0025 (JP)

(74) Representative: Novagraaf Technologies
Bâtiment O2
2, rue Sarah Bernhardt
CS90017
92665 Asnières-sur-Seine Cedex (FR)

(54) **EXHAUST GAS PURIFICATION CATALYST**

(57) An object of the present invention is to provide an exhaust gas purification catalyst with excellent exhaust gas purification performance, and the present invention provides an exhaust gas purification catalyst (1), including a substrate (10), a first catalyst layer (20) provided on an upstream side of the substrate (10), and a second catalyst layer (30) provided on a downstream side of the substrate (10), wherein the first catalyst layer (20) contains a noble metal element and a Ce-Zr-based complex oxide, wherein the second catalyst layer (30) contains a noble metal element and $Al_2O_3$, wherein a mass content of Al in terms of $Al_2O_3$ in the first catalyst layer (20) is 12% by mass or less, and wherein a ratio of the mass content of Al in terms of $Al_2O_3$ in the first catalyst layer (20) to a mass content of Al in terms of $Al_2O_3$ in the second catalyst layer (30) is 0 or more and 0.65 or less.

[Figure 6]

**Description**

**TECHNICAL FIELD**

The present invention relates to an exhaust gas purification catalyst.

**BACKGROUND ART**

Exhaust gas emitted from an internal combustion engine of an automobile, a motorcycle or the like contains harmful components such as hydrocarbons (HC), carbon monoxide (CO) and nitrogen oxides (NOx). An exhaust gas purification catalyst containing a noble metal element such as Pt, Pd, or Rh is used to purify and detoxify those harmful components. Pt and Pd are mainly involved in oxidative purification of HC and CO, and Rh is mainly involved in reductive purification of NOx.

In order to maximize the performance of a noble metal element in an exhaust gas purification catalyst, a catalyst in which a catalyst layer is composed of an upstream portion and a downstream portion with a different composition from the upstream portion is proposed (for example, Patent Document 1).

Due to the increasing demand for improved exhaust gas purification performance in recent years, there is a growing need for an exhaust gas purification catalyst with excellent exhaust gas purification performance.

**CITATION LIST**

PATENT DOCUMENT

Patent Document 1: Japanese Patent Laid-Open No. 2019-136695

**SUMMARY OF INVENTION**

TECHNICAL PROBLEM

An object of the present invention is to provide an exhaust gas purification catalyst with excellent exhaust gas purification performance.

SOLUTION TO PROBLEM

The present invention provides the following inventions.

[1] An exhaust gas purification catalyst, including a substrate, a first catalyst layer provided on an upstream side of the substrate, and a second catalyst layer provided on a downstream side of the substrate,

wherein the first catalyst layer contains a noble metal element and a Ce-Zr-based complex oxide,
wherein the second catalyst layer contains a noble metal element and $Al_2O_3$,
wherein a mass content of Al in terms of $Al_2O_3$ in the first catalyst layer is 12% by mass or less, and
wherein a ratio of the mass content of Al in terms of $Al_2O_3$ in the first catalyst layer to a mass content of Al in terms of $Al_2O_3$ in the second catalyst layer is 0 or more and 0.65 or less.

[2] The exhaust gas purification catalyst according to [1], wherein a ratio of a mass of the first catalyst layer per unit volume of a portion of the substrate provided with the first catalyst layer to a mass of the second catalyst layer per unit volume of a portion of the substrate provided with the second catalyst layer is 0.95 or less.

[3] The exhaust gas purification catalyst according to [1] or [2], wherein each of the first catalyst layer and the second catalyst layer contains Pd and/or Pt.

[4] The exhaust gas purification catalyst according to [3], wherein the exhaust gas purification catalyst further includes a third catalyst layer provided on an upside of the first catalyst layer and /or a fourth catalyst layer provided on an upside of the second catalyst layer, and wherein each of the third catalyst layer and the fourth catalyst layer contains Rh.

[5] The exhaust gas purification catalyst according to any one of [1] to [4], wherein the first catalyst layer contains Pd.

[6] The exhaust gas purification catalyst according to any one of [1] to [5], wherein a ratio of the mass content of Al in terms of $Al_2O_3$ in the second catalyst layer to a mass content of the noble metal element in terms of metal in the second catalyst layer is 50 or more and 600 or less.

[7] The exhaust gas purification catalyst according to any one of [1] to [6], wherein a mass content of Ce in terms of

CeO$_2$ in the first catalyst layer is 32% by mass or more.

EFFECTS OF INVENTION

According to the present invention, there is provided an exhaust gas purification catalyst with excellent exhaust gas purification performance.

**BRIEF DESCRIPTION OF THE DRAWINGS**

Figure 1 is a partial end view depicting the state where an exhaust gas purification catalyst according to a first embodiment of the present invention is disposed in an exhaust pathway of an internal combustion engine.

Figure 2 is an end view taken along line A-A in Figure 1.

Figure 3 is an end view taken along line B-B of Figure 1.

Figure 4 is an enlarged view of a region denoted by the reference sign R1 in Figure 2.

Figure 5 is an enlarged view of a region denoted by the reference sign R2 in Figure 3.

Figure 6 is an end view taken along line C-C of Figure 1.

Figure 7 is an end view (end view corresponding to Figure 6) of an exhaust gas purification catalyst according to a second embodiment of the present invention.

**DETAILED DESCRIPTION OF EMBODIMENTS**

<< Description of terms >>

Hereinafter, the terms used herein will be described. Unless otherwise specified, the following descriptions are applied to the entirety of the present specification.

< Rare earth element >

Examples of a rare earth element include Sc, Y, La, Ce, Pr, Nd, Pm, Sm, Eu, Gd, Tb, Dy, Ho, Er, Tm, Yb, and Lu.

< Oxide >

An oxide of a rare earth element excluding Ce, Pr, and Tb means a sesqui oxide ($M_2O_3$, wherein M represents a rare earth element other than Ce, Pr, and Tb), an oxide of Ce means $CeO_2$, an oxide of Pr means to $Pr_6O_{11}$, an oxide of Tb means $Tb_4O_7$, an oxide of Al means $Al_2O_3$, an oxide of Zr means $ZrO_2$, an oxide of Si means $SiO_2$, an oxide of B means $B_2O_3$, an oxide of Cr means $Cr_2O_3$, an oxide of Mg means MgO, an oxide of Ca means CaO, an oxide of Sr means SrO, an oxide of Ba means BaO, an oxide of Fe means $Fe_3O_4$, an oxide of Mn means $Mn_3O_4$, an oxides of Ni means NiO, an oxide of Ti means $TiO_2$, an oxide of Zn means ZnO, and an oxide of Sn means $SnO_2$.

< Al-based oxide >

An Al-based oxide means an oxide containing Al, wherein Al is the element with the highest mass-based content among the element other than oxygen which constitute the oxide. It should be noted that an oxide falling within the scope of a Ce-Zr-based complex oxide is excluded from the scope of the Al-based oxide. The Ce-Zr-based complex oxide will be described below. The Al-based oxide is distinct from alumina used as a binder. In the present specification, alumina used as a binder may be referred to as an "alumina binder".

The Al-based oxide is, for example, in particulate form. The Al-based oxide is used as a carrier for a catalytically-active component. From the viewpoint of improving the supportability for a catalytically-active component, the Al-based oxide is preferably porous.

The Al-based oxide may contain one element other than Al and O, or two or more elements other than Al and O.

The element(s) other than Al and O can be selected from, for example, rare earth elements (for example, Ce, Y, Pr, La, Nd, Sm, Eu, Gd, and the like), alkaline earth metal elements (for example, Mg, Ca, Sr, Ba, and the like), B, Si, Zr, Cr, and the like.

Examples of the Al-based oxide include alumina (an oxide composed of Al and O), an oxide obtained by modifying the surface of alumina with the other element(s), an oxide obtained by dissolving the other element(s) in alumina, and the like. Examples of the Al-based oxide containing the element(s) other than Al and O include alumina-silica, alumina-zirconia, alumina-chromia, alumina-ceria, alumina-lanthana, and the like.

In one embodiment, the Al-based oxide contains one rare earth element, or two or more rare earth elements. From the viewpoint of improving the heat resistance of the Al-based oxide, the rare earth element(s) is/are preferably selected from La, Y, Ce, Nd, Pr, and the like. From the viewpoint of improving the heat resistance of the Al-based oxide, the content of the rare earth element(s) in terms of oxide in the Al-based oxide is preferably 0.1% by mass or more and 50% by mass or less, more preferably 0.1% by mass or more and 30% by mass or less, still more preferably 0.2% by mass or more and 20% by mass or less, and still more preferably 0.3% by mass or more and 10% by mass or less, based on the mass of the Al-based oxide. The expression "the content of the rare earth element(s) in terms of oxide in the Al-based oxide" means, in the case where the Al-based oxide contains one rare earth element, the content of the one rare earth element in terms of oxide, and means, in the case where the Al-based oxide contains two or more rare earth elements, the total content of the two or more rare earth elements in terms of oxide.

In the case where the composition of the Al-based oxide is known, the content of each element in terms of oxide in the Al-based oxide can be determined from the composition of the Al-based oxide.

In the case where the composition of the Al-based oxide is not known, the content of each element in terms of oxide in the Al-based oxide can be determined by analyzing a sample containing the Al-based oxide by energy dispersive X-ray spectroscopy (EDX) to obtain an element mapping, and performing EDX elemental analysis on a designated particle in the obtained element mapping. Specifically, the content of each element in terms of oxide in the designated particle can be determined by qualitatively identifying (color-coding) an Al-based oxide particle and other oxide particle(s) by elemental mapping and performing composition analysis (elemental analysis) on the designated particle.

< Ce-based oxide >

A Ce-based oxide means an oxide containing Ce, wherein Ce is the element with the highest mass-based content among the elements other than oxygen which constitute the oxide. It should be noted that an oxide falling within the scope of a Ce-Zr-based complex oxide is excluded from the scope of the Ce-based oxide. The Ce-Zr-based complex oxide will be described below. The Ce-based oxide is distinct from ceria used as a binder. In the present specification, ceria used as a binder may be referred to as a "ceria binder".

The Ce-based oxide is, for example, in particulate form. The Ce-based oxide is used as a carrier for a catalytically-active component. From the viewpoint of improving the supportability for a catalytically-active component, the Ce-based oxide is preferably porous.

The Ce-based oxide may contain one element other than Ce and O, or two or more elements other than Ce and O. The element(s) other than Ce and O can be selected from, for example, rare earth elements other than Ce, alkaline earth metal elements (for example, Mg, Ca, Sr, Ba, and the like), Fe, Mn, Ni, Zr, Al, and the like.

Examples of the Ce-based oxide include ceria (an oxide composed of Ce and O), an oxide obtained by modifying the surface of ceria with the other element(s), an oxide obtained by dissolving the other element(s) in ceria, and the like.

The content of each element in terms of oxide in the Ce-based oxide can be determined in the same manner as the content of each element in terms of oxide in the Al-based oxide.

< Ce-Zr-based complex oxide >

A Ce-Zr-based complex oxide means a complex oxide containing Ce and Zr, wherein the content of Ce in terms of $CeO_2$ in the complex oxide is 5% by mass or more and 95% by mass or less, based on the mass of the complex oxide, and wherein the content of Zr in terms of $ZrO_2$ in the complex oxide is 5% by mass or more and 95% by mass or less, based on the mass of the complex oxide.

The Ce-Zr-based complex oxide is, for example, in particulate form. The Ce-Zr-based complex oxide is used as a carrier for a catalytically-active component. From the viewpoint of improving the supportability for a catalytically-active component, the Ce-Zr-based complex oxide is preferably porous.

The Ce-Zr-based complex oxide may contain one element other than Ce, Zr, and O, or two or more elements other than Ce, Zr, and O. The element(s) other than Ce, Zr, and O can be selected from, for example, rare earth elements other than Ce, alkaline earth metal elements (for example, Mg, Ca, Sr, Ba, and the like), Fe, Mn, Ni, Al, and the like.

In the Ce-Zr-based complex oxide, Ce may form a solid solution phase (e.g., a solid solution phase of $CeO_2$ and $ZrO_2$), may form a single phase (e.g., a single phase of $CeO_2$) which is a crystalline phase or an amorphous phase, or may form both the solid solution phase and the single phase. It is preferable that at least part of Ce forms the solid solution phase.

In the Ce-Zr-based complex oxide, Zr may form a solid solution phase (e.g., a solid solution phase of $CeO_2$ and $ZrO_2$), may form a single phase (e.g., a single phase of $ZrO_2$) which is a crystalline phase or an amorphous phase, or may form both the solid solution phase and the single phase. It is preferable that at least part of Zr forms the solid solution phase.

In the case where the Ce-Zr-based complex oxide contains an element(s) other than Ce, Zr, and O (hereinafter, referred to as an "other element(s)"), the other element(s) may form a solid solution phase (e.g., a solid solution phase of $CeO_2$ and an oxide(s) of the other element(s), a solid solution phase of $ZrO_2$ and an oxide(s) of the other element(s), and a solid solution phase of $CeO_2$, $ZrO_2$, and an oxide(s) of the other element(s)), may form a single phase (e.g., a single phase of an oxide(s) of the other element(s)) which is a crystalline phase or an amorphous phase, or may form both the solid solution phase and the single phase. It is preferable that at least part of the other element(s) forms the solid solution phase.

The content of each element in terms of oxide in the Ce-Zr-based complex oxide can be determined in the same manner as the content of each element in terms of oxide in the Al-based oxide.

<< First embodiment >>

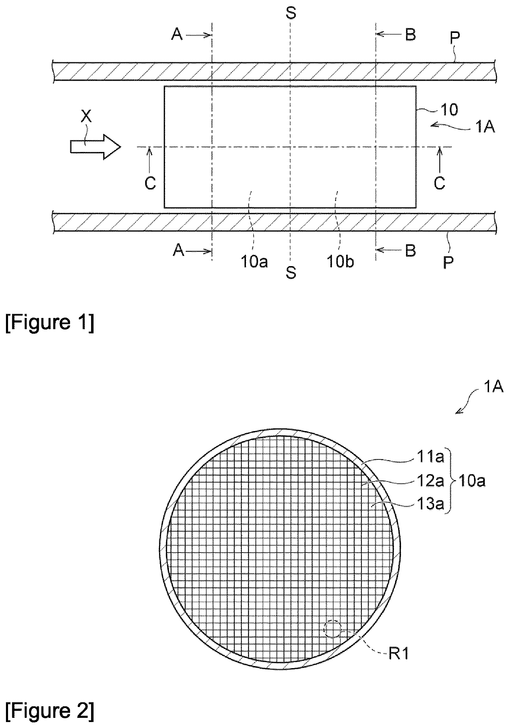

Hereinafter, an exhaust gas purification catalyst 1A according to a first embodiment of the present invention (hereinafter, referred to as a "catalyst 1A") will be described with reference to Figures 1 to 6.

As shown in Figure 1, the catalyst 1A is disposed in an exhaust gas path in an exhaust pipe P of an internal combustion engine. The internal combustion engine is, for example, a gasoline engine. Exhaust gas emitted from the internal combustion engine flows through the exhaust gas path in the exhaust pipe P from one end to the other end of the exhaust pipe P, and is purified by the catalyst 1A provided in the exhaust pipe P. In the drawings, the exhaust gas flow direction is denoted by the reference sign X. In the present specification, an upstream position in the exhaust gas flow direction X may be referred to as an "exhaust gas inflow side" or "upstream side", and a downstream position in the exhaust gas flow direction X may be referred to as an "exhaust gas outflow side" or "downstream side".

In the exhaust gas path of the exhaust pipe P, another exhaust gas purification catalyst may be disposed on the upstream side and/or downstream side of the catalyst 1A.

As shown in Figures 2 to 6, the catalyst 1A includes a substrate 10, a first catalyst layer 20 provided on the upstream side of the substrate 10, a second catalyst layer 30 provided on the downstream side of the substrate 10, a third catalyst layer 40 provided on the upside of the first layer 20, and a fourth catalyst layer 50 provided on the upside of the second catalyst layer 30.

In the present specification, the content of Ce in terms of $CeO_2$ in the first catalyst layer 20 based on the mass of the first catalyst layer 20 may be referred to as "the mass content of Ce in terms of $CeO_2$ in the first catalyst layer 20", the content of Al in terms of $Al_2O_3$ in the first catalyst layer 20 based on the mass of the first catalyst layer 20 may be referred to as "the mass content of Al in terms of $Al_2O_3$ in the first catalyst layer 20", the content of a noble metal element in terms of metal in the second catalyst layer 30 based on the mass of the second catalyst layer 30 may be referred to as "the mass content of the noble metal element in terms of metal in the second catalyst layer 30", and the content of Al in terms of $Al_2O_3$ in the second catalyst layer 30 based on the mass of the second catalyst layer 30 may be referred to as "the mass content of Al in terms of $Al_2O_3$ in the second catalyst layer 30".

The catalyst 1A is characterized in that: the first catalyst layer 20 contains a noble metal element and a Ce-Zr-based complex oxide; the second catalyst layer 30 contains a noble metal element and $Al_2O_3$; the mass content of Al in terms of $Al_2O_3$ in the first catalyst layer is 12% by mass or less; and the ratio of the mass content of Al in terms of $Al_2O_3$ in the first catalyst layer 20 to the mass content of Al in terms of $Al_2O_3$ in the second catalyst layer 30 is 0 or more and 0.65 or less.

In the catalyst 1A, the first catalyst layer 20 is provided on the upstream side of the substrate 10, and the second catalyst layer 30 is provided on the downstream side of the substrate 10. Therefore, the exhaust gas flowing into the substrate 10 comes in contact with the first catalyst layer 20 before reaching the second catalyst layer 30.

When the environment in which the catalyst 1A is placed is a low temperature environment immediately after start-up of the internal combustion engine, the activities of catalytically-active components (e.g., noble metal elements such as Pd and Pt) in the first catalyst layer 20 and the second catalyst layer 30 are low, and thus the exhaust gas purification performance of the catalyst 1A is low. Therefore, from the viewpoint of improving the exhaust gas purification performance of the catalyst 1A, it is required to improve the warm-up efficiencies of the first catalyst layer 20 and the second catalyst layer 30. In particular, improving the warm-up efficiency of the first catalyst layer 20, which comes in contact with the exhaust gas earlier than the second catalyst layer 30, is effective in improving the exhaust gas purification performance of the catalyst 1A.

$Al_2O_3$ exhibits low warm-up efficiency due to its high specific heat capacity. Therefore, from the viewpoint of improving the warm-up efficiency of the first catalyst layer 20, it is required to reduce the mass content of Al in terms of $Al_2O_3$ in the first catalyst layer 20.

When the environment in which the catalyst 1A is placed is a high temperature environment during high-speed operation of the internal combustion engine, the temperatures of the first catalyst layer 20 and the second catalyst layer 30 sufficiently increase. However, the amount of harmful components (e.g., hydrocarbons (HC), carbon monoxide (CO), nitrogen oxides (NOx), and the like) in exhaust gas emitted per hour increases. Therefore, the number of active sites of a catalytically-active component is more important than the warm-up efficiency.

$Al_2O_3$ has the function of suppressing the decrease in the degree of dispersion of a catalytically-active component after exposure to a high temperature environment (i.e., a reduction in the number of active sites of a catalytically-active component after exposure to a high temperature environment). Therefore, from the viewpoint of suppressing the decrease in the degree of dispersion of a catalytically-active component after exposure to a high temperature environment, it is preferable to increase the mass content of Al in terms of $Al_2O_3$ in the first catalyst layer 20 and the mass content of Al in terms of $Al_2O_3$ in the second catalyst layer 30. However, from the viewpoint of improving the warm-up efficiency of the first catalyst layer 20, it is not allowed to increase the mass content of Al in terms of $Al_2O_3$ in the first catalyst layer 20. Therefore, it is required to increase the mass content of Al in terms of $Al_2O_3$ in the second catalyst layer 30.

As described above, from the viewpoint of achieving the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine, it is required to reduce the mass content of Al in terms of $Al_2O_3$ in the first catalyst layer 20, and increase the mass content of Al in terms of $Al_2O_3$ in the second catalyst layer 30. Therefore, the mass content of Al in terms of $Al_2O_3$ in the first catalyst layer 20 and the mass content of Al in terms of $Al_2O_3$ in the second catalyst layer 30 are adjusted so that the mass content of Al in terms of $Al_2O_3$ in the first catalyst layer 20 is 12% by mass or less, and the ratio of the mass content of Al in terms of $Al_2O_3$ in the first catalyst layer to the mass content of Al in terms of $Al_2O_3$ in the second catalyst layer is 0 or more and 0.65 or less. This makes it possible to achieve the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine. Accordingly, the catalyst 1A can exhibit excellent exhaust gas purification performance, compared to a catalyst in which the above-described ratio falls outside the above-described ratio.

It is desirable that an air-fuel ratio (A/F) during supply to the internal combustion engine be controlled to be near the theoretical air-fuel ratio (stoichiometry). However, since the actual air-fuel ratio swings, with a stoichiometry at the center, to the rich side (fuel-rich atmosphere) or the lean side (fuel-lean atmosphere), depending on driving conditions of the motor vehicle or the like, the air-fuel ratio of exhaust gas similarly swings to the rich or lean side. To allow the catalyst 1A to sufficiently exhibit its purification performance, it is required to mitigate fluctuations in the oxygen concentration in exhaust gas. When the first catalyst layer 20 contains a Ce-Zr-based complex oxide, which has an oxygen storage capacity (i.e., an ability to absorb oxygen when the oxygen concentration in exhaust gas is high and release oxygen when the oxygen concentration in exhaust gas is low), fluctuations in the oxygen concentration in exhaust gas are migrated, and the operating window of a catalytically-active component is expanded. When the first catalyst layer 20, located on the upstream side of the second catalyst layer 30, contains a Ce-Zr-based complex oxide, it is possible to mitigate fluctuations in the oxygen concentration in exhaust gas not only in the first catalyst layer 20 but also in the second catalyst layer 30, located on the downstream side of the first catalyst layer 20, thereby improving the exhaust gas purification performance of the catalyst 1A.

From the viewpoint of more effectively achieving the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine, the ratio of the mass content of Al in terms of $Al_2O_3$ in the first catalyst layer to the mass content of Al in terms of $Al_2O_3$ in the second catalyst layer is preferably 0 or more and 0.50 or less, more preferably 0 or more and 0.30 or less, and still more preferably 0 or more and 0.10 or less.

The improvement in the warm-up efficiency of the first catalyst layer 20 in a low temperature environment is pronounced when the temperature of the low temperature environment is 500°C or less, more pronounced when the temperature of the low temperature environment is 450°C or less, and still more pronounced when the temperature of the low temperature environment is 400°C or less.

The suppression of the decrease in the degree of dispersion of a catalytically-active component after exposure to a high temperature environment is pronounced when the temperature of the high temperature environment is 550°C or more, more pronounced when the temperature of the high temperature environment is 600°C or more, and still more pronounced when the temperature of the high temperature environment is 650°C or more.

< Substrate >

Hereinafter, the substrate 10 will be described.

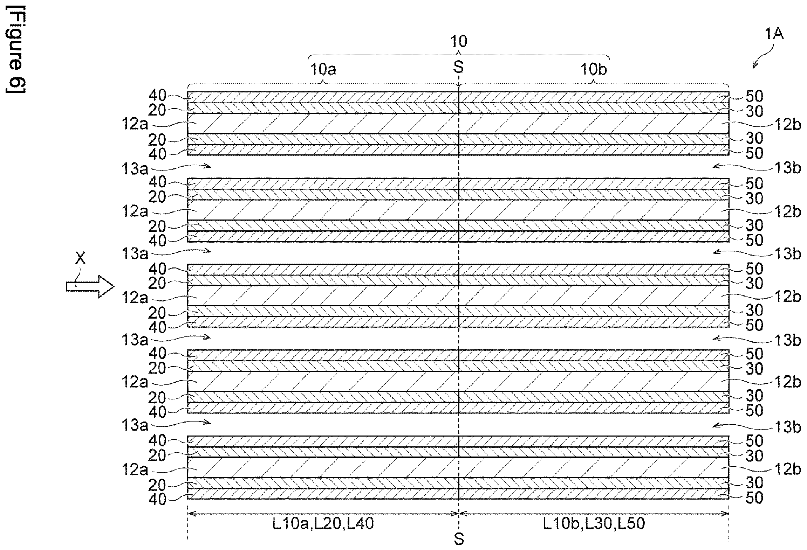

As shown in Figures 1 and 6, the substrate 10 extends in the exhaust gas flow direction X.

As shown in Figures 1 and 6, the substrate 10 is disposed in the exhaust gas path in the exhaust pipe P so that the axial direction of the substrate 10 coincides or roughly coincides with the exhaust gas flow direction X.

As shown in Figures 1 to 6, the substrate 10 includes a first substrate part 10a located on the upstream side of the exhaust gas flow direction X, and a second substrate part 10b located on the downstream side of the exhaust gas flow direction X.

As shown in Figures 1 and 6, each of the first substrate part 10a and the second substrate part 10b extends in the exhaust gas flow direction X, and has an end on the exhaust gas inflow side and an end on the exhaust gas outflow side.

As shown in Figures 1 and 6, each of the first substrate part 10a and the second substrate part 10b is disposed in the exhaust gas path in the exhaust pipe P so that the axial direction of each of the first substrate part 10a and the second substrate part 10b coincides or roughly coincides with the exhaust gas flow direction X.

As shown in Figures 1 and 6, it is preferable that the axial direction of the first substrate part 10a and the axial direction of the second substrate part 10b coincide or roughly coincide.

The first substrate part 10a and the second substrate part 10b are integrally formed, and the end on the exhaust gas outflow side of the first substrate part 10a is continuous with the end on the exhaust gas inflow side of the second substrate part 10b. In the drawings, the boundary between the end on the exhaust gas outflow side of the first substrate part 10a and the end on the exhaust gas inflow side of the second substrate part 10b is indicated by the reference sign S.

Hereafter, the common features of the first substrate part 10a and the second substrate part 10b will be described collectively. In the following descriptions, the expressions "substrate part 10a, 10b", "tubular member 11a, 11b", "partition wall 12a, 12b", "cells 13a, 13b", and "length L10a, L10b" are used. These expressions refer to "substrate part 10a", "tubular member 11a", "partition wall 12a", "cells 13a", and "length L10a" in relation to the first substrate part 10a, and to "substrate part 10b", "tubular member 11b", "partition wall 12b", "cells 13b", and "length L10b" in relation to the second substrate part 10b.

The material constituting the substrate part 10a, 10b can be appropriately selected from known materials. Examples of the material constituting the substrate part 10a, 10b include a ceramic material and a metal material. The ceramic material is preferred. Examples of the ceramic material include carbide ceramics such as silicon carbide, titanium carbide, tantalum carbide and tungsten carbide, nitride ceramics such as aluminum nitride, silicon nitride, boron nitride and titanium nitride, oxide ceramics such as alumina, zirconia, cordierite, mullite, zircon, aluminum titanate and magnesium titanate, and the like. Examples of the metal material include alloys such as stainless steel, and the like.

The material constituting the substrate part 10a is usually the same as the material constituting the substrate part 10b.

As shown in Figures 2 to 6, the substrate part 10a, 10b includes a tubular member 11a, 11b, a partition wall 12a, 12b provided in the tubular member 11a, 11b, and cells 13a, 13b separated from one another by the partition wall 12a, 12b. The substrate part 10a, 10b preferably have a honeycomb structure.

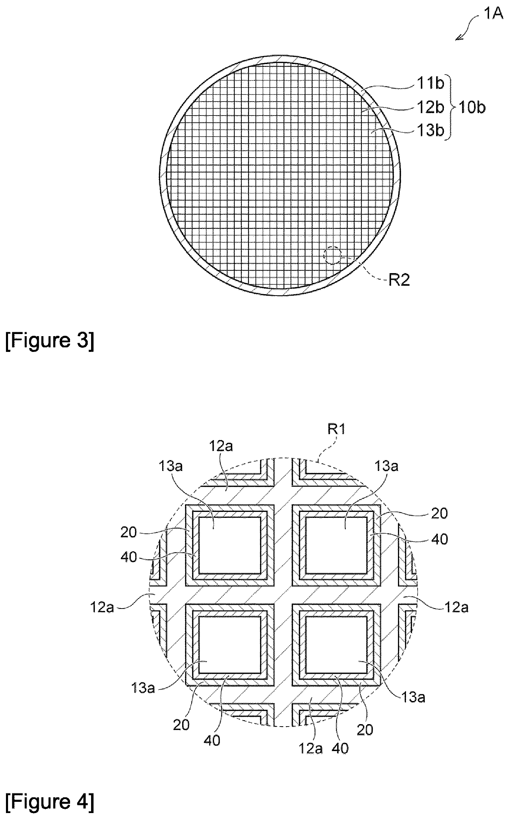

As shown in Figures 2 and 3, the tubular member 11a, 11b defines the external shape of the substrate part 10a, 10b, and the axial direction of the tubular member 11a, 11b coincides with the axial direction of the substrate part 10a, 10b. As shown in Figure 2 and 3, the tubular member 11a, 11b has a hollow cylindrical shape, but may have another shape such as a hollow elliptic cylindrical shape or a polygonal tubular shape.

As shown in Figures 2 to 6, the partition wall 12a, 12b is present between adjacent cells 13a, 13b, whereby the adjacent cells 13a, 13b are separated from each other by the partition wall 12a, 12b. The partition wall 12a, 12b may have a porous structure allowing exhaust gas to pass through. The thickness of the partition wall 12a, 12b is, for example, 20 $\mu$m or more and 1500 $\mu$m or less.

As shown in Figure 6, each cell 13a, 13b extends in the exhaust gas flow direction X and has an end on the exhaust gas inflow side and an end on the exhaust gas outflow side.

As shown in Figure 6, the end on the exhaust gas inflow side and the end on the exhaust gas outflow side of each cell 13a, 13b are both open.

As shown in Figure 6, the end (opening) on the exhaust gas outflow side of each cell 13a and the end (opening) on the exhaust gas inflow side of each cell 13b are in communication with each other so that one cell 13a and one cell 13b form a single exhaust gas flow path extending in the exhaust gas flow direction X.

The exhaust gas that has flowed into each cell 13a from the end (opening) on the exhaust gas inflow side thereof flows out from the end (opening) on the exhaust gas outflow side thereof. The exhaust gas that has flowed out from the end (opening) on the exhaust gas outflow side of each cell 13a flows into each cell 13b from the end (opening) on the exhaust gas inflow side thereof, and flows out from the end (opening) on the exhaust gas outflow side thereof. Such a mode is called a flow-through type.

As shown in Figures 2 to 5, the shape in a plan view of the end (opening) on the exhaust gas inflow side of each cell 13a, 13b is rectangle, but may be another shape such as hexagon or octagon. The same applies to the shape in a plan view of the end (opening) on the exhaust gas outflow side of each cell 13a, 13b.

The cell density per square inch of the substrate part 10a, 10b is, for example, 100 cells or more and 1200 cells or less. The cell density per square inch of the substrate part 10a, 10b means the total number of cells 13a, 13b per square inch in a cross section obtained by cutting the substrate part 10a, 10b by a plane perpendicular to the exhaust gas flow direction X.

The substrate part 10a, 10b has a length L10a, 10b.

The volume of the substrate part 10a, 10b is, for example, 0.1 L or more and 20 L or less. The volume of the substrate part 10a, 10b means the apparent volume of the substrate part 10a, 10b. For example, in the case where the substrate part 10a, 10b is in the form of a cylinder with an outer diameter of $2r$, the volume of the substrate part 10a, 10b is represented by the formula: Volume of substrate part 10a, 10b = $\pi$ x $r^2$ x (Length L10a, 10b).

The percentage of the length L10a of the first substrate part 10a relative to the total of the length L10a of the first substrate part 10a and the length L10b of the second substrate part 10b (L10a / (L10a + L10b) x 100) is preferably 15% or more and 80% or less, more preferably 18% or more and 70% or less, and still more preferably 20% or more and 60% or less. In one example, the percentage of the length L10a of the first substrate part 10a relative to the total of the length L10a of the first substrate part 10a and the length L10b of the second substrate part 10b (L10a / (L10a + L10b) x 100) is 50%.

The percentage of the length L10b of the second substrate part 10b relative to the total of the length L10a of the first substrate part 10a and the length L10b of the second substrate part 10b (L10b / (L10a + L10b) x 100) is preferably 20% or more and 85% or less, more preferably 30% or more and 82% or less, and still more preferably 40% or more and 80% or less. In one example, the percentage of the length L10b of the second substrate part 10b relative to the total of the length L10a of the first substrate part 10a and the length L10b of the second substrate part 10b (L10b / (L10a + L10b) x 100) is 50%.

< First catalyst layer >

Hereinafter, the first catalyst layer 20 will be described.

As shown in Figures 4 and 6, the first catalyst layer 20 is provided on the upstream side of the substrate 10 (i.e., on the first substrate part 10a). Specifically, the first catalyst layer 20 is provided on the surface on the cell 13a side of the partition wall 12a. The expression "the surface on the cell 13a side of the partition wall 12a" means the outer surface of the partition wall 12a, the outer surface extending in the exhaust gas flow direction X. The first catalyst layer 20 may be provided directly on the surface on the cell 13a side of the partition wall 12a, or may be provided via another layer on the surface on the cell 13a side of the partition wall 12a. Usually, the first catalyst layer 20 is provided directly on the surface on the cell 13a side of the partition wall 12a.

The first catalyst layer 20 may be composed of a structure rising from the surface on the cell 13a side of the partition wall 12a toward the cell 13a side (hereinafter referred to as a "rising structure"), or may be composed of a structure present inside the partition wall 12a (hereinafter referred to as an "internal structure"), or may have both of the rising structure and the internal structure. The expression "the first catalyst layer 20 provided on the upstream side of the substrate 10" encompasses an embodiment wherein the first catalyst layer 20 is composed of the rising structure, an embodiment wherein the first catalyst layer 20 is composed of the internal structure, and an embodiment wherein the first catalyst layer 20 has both the rising structure and the internal structure.

As shown in Figure 6, the first catalyst layer 20 extends from the end on the exhaust gas inflow side of the partition wall 12a to the end on the exhaust gas outflow side of the partition wall 12a along the exhaust gas flow direction X. The first catalyst layer 20 may extend from the end on the exhaust gas inflow side of the partition wall 12a along the exhaust gas flow direction X so as not to reach the end on the exhaust gas outflow side of the partition wall 12a, or may extend from the end on the exhaust gas outflow side of the partition wall 12a along the direction opposite to the exhaust gas flow direction X so as not to reach the end on the exhaust gas inflow side of the partition wall 12a.

From the viewpoint of more effectively achieving the improvement in the warm-up efficiency of the first catalyst layer 20, which is required when the environment in which the catalyst 1A is placed is a low temperature environment immediately after start-up of the internal combustion engine, the mass (mass after calcining) of the first catalyst layer 20 per unit volume of the portion of the substrate 10 provided with the first catalyst layer 20, namely, the mass (mass after calcining) of the first catalyst layer 20 per unit volume of the portion of the first substrate part 10a provided with the first catalyst layer 20 is preferably 60 g/L or more and 200 g/L or less, more preferably 70 g/L or more and 175 g/L or less, still more preferably 80 g/L or more and 150 g/L or less, and still more preferably 90 g/L or more and 125 g/L or less. The mass of the first catalyst layer 20 per unit volume of the portion of the first substrate part 10a provided with the first catalyst layer 20 is calculated from the formula: (Mass of first catalyst layer 20) / ((Volume of first substrate part 10a) x (Average length L20 of first catalyst layer 20 / Length L10a of first substrate part 10a)). The term "length" means the dimension in the axial direction of the first substrate part 10a.

In the present specification, the expression "the mass of the first catalyst layer 20" means the total of the masses of all metal elements contained in the first catalyst layer 20, wherein the mass(es) of a noble metal element(s) is/are determined in terms of metal, and wherein the mass(es) of a metal element(s) other than the noble metal element(s) is/are determined in terms of oxide. In other words, the expression "the mass of the first catalyst layer 20" means the calculated mass obtained by totalizing the mass(es) of the noble metal element(s) contained in the first catalyst layer 20 in terms of metal and the mass(es) of the metal element(s) other than the noble metal element(s) contained in the first catalyst layer 20 in terms of oxide. The term "metal element" encompasses metalloid elements such as Si, B, and the like.

In the present specification, the term "noble metal element" encompasses Pt (platinum element), Pd (palladium element), Rh (rhodium element), Ru (ruthenium element), Os (osmium element), Ir (iridium element), Au (gold), and Ag (silver).

The meaning of the term "oxide" is as defined in the above section << Description of terms >>.

One example of the method of measuring the average length L20 of the first catalyst layer 20 is as follows:

A sample extending in the axial direction of the first substrate part 10a and having the same length as the length L10a of the first substrate part 10a is cut out from the catalyst 1A. The sample is, for example, in the form of a cylinder having a diameter of 25.4 mm. The value of the diameter of the sample can be changed, as necessary. In the case where the first catalyst layer 20 extends from the end on the exhaust gas inflow side of the partition wall 12a along the exhaust gas flow direction X, the sample is cut at 5 mm intervals in planes perpendicular to the axial direction of the first substrate part 10a to obtain cut pieces, which are referred to as the first cut piece, the second cut piece and so on up to the n-th cut piece, sequentially from the side of the end on the exhaust gas inflow side of the sample. In the case where the first catalyst layer 20 extends from the end on the exhaust gas outflow side of the partition wall 12a along the direction opposite to the exhaust gas flow direction X, the sample is cut at 5 mm intervals in planes perpendicular to the axial direction of the first substrate part 10a to obtain cut pieces, which are referred to as the first cut piece, the second cut piece and so on up to the n-th cut piece, sequentially from the side of the end on the exhaust gas outflow side of the sample. In both cases, the length of each cut piece is 5 mm. The composition of each cut piece is analyzed using an X-ray fluorescence analyzer (XRF) (e.g., an energy dispersive X-ray analyzer (EDX), a wavelength dispersive X-ray analyzer (WDX) or the like), an inductively coupled plasma emission spectrophotometer (ICP-AES), a scanning electron microscopy-energy dispersive X-ray spectroscopy (SEM-EDX), or the like, and it is confirmed whether or not each cut piece includes part of the first catalyst layer 20, based on the composition of each cut piece.

The compositional analysis is not necessarily performed for a cut piece that apparently includes a part of the first catalyst layer 20. For example, it is possible to confirm whether or not each cut piece includes part of the first catalyst layer 20, by observing a cross section thereof using a scanning electron microscope (SEM), an electron probe microanalyzer (EPMA), or the like. At the time of observing the cross section, element mapping of the cross section may be performed.

After confirming whether or not each cut piece includes part of the first catalyst layer 20, the length of the first catalyst layer 20 included in the sample is calculated based on the following formula:

Length of first catalyst layer 20 included in sample = 5 mm x (Number of cut pieces each including part of first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 x k) mm.

One example of the method of more specifically measuring the length of the first catalyst layer 20 included in the sample is as follows:

The k-th cut piece (in the case where the first catalyst layer 20 extends from the end on the exhaust gas inflow side of the partition wall 12a along the exhaust gas flow direction X, the k-th cut piece is a cut piece closest to the end on the exhaust gas outflow side of the sample, among the cut pieces each including part of the first catalyst layer 20, and in the case where the first catalyst layer 20 extends from the end on the exhaust gas outflow side of the partition wall 12a along the direction opposite to the exhaust gas flow direction X, the k-th cut piece is a cut piece closest to the end on the exhaust gas inflow side of the sample, among the cut pieces each including part of the first catalyst layer 20) is cut in the axial direction of the first substrate part 10a, and part of the first catalyst layer 20 existing in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula:

Length of first catalyst layer 20 included in sample = (5 mm x (k-1)) + (Length of part of first catalyst layer 20 included in k-th cut piece)

For 8 to 16 samples arbitrarily cut out from the catalyst 1A, the length of the first catalyst layer 20 included in each sample is calculated, and the average value of the measured lengths is defined as the average length L20 of the first catalyst layer 20.

From the viewpoint of more effectively achieving the improvement in the warm-up efficiency of the first catalyst layer 20, which is required when the environment in which the catalyst 1A is placed is a low temperature environment immediately after start-up of the internal combustion engine, the percentage of the average length L20 of the first catalyst layer 20 relative to the length L10a of the first substrate part 10a (L20 / L10a x 100) is preferably 80% or more, more preferably 90% or more, and still more preferably 95% or more. The upper limit may be 100%, or may be more than 100%. In the case where the end on the exhaust gas outflow side of the first catalyst layer 20 has a portion that overlaps with the end on the exhaust gas inflow side of the second catalyst layer 30 as mentioned below, the percentage can be more than 100%. When the percentage is more than 100%, the upper limit of the percentage is preferably 600% or less, more preferably 400% or less, and still more preferably 300% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

From the viewpoint of more effectively achieving the improvement in the warm-up efficiency of the first catalyst layer 20, which is required when the environment in which the catalyst 1A is placed is a low temperature environment immediately after start-up of the internal combustion engine, the percentage of the average length L20 of the first catalyst layer 20 relative to the total of the length L10a of the first substrate part 10a and the length L10b of the second substrate part 10b (L20 / (L10a + L10b) x 100) is preferably 15% or more and 80% or less, more preferably 18% or more and 70% or less, and still more preferably 20% or more and 60% or less.

The first catalyst layer 20 contains one noble metal element as a catalytically-active component, or two or more noble metal elements as catalytically-active components. Each noble metal element can be selected from, for example, Pd, Pt, Rh, Au, Ag, Ir, Ru, Os, and the like. Each noble metal element contained in the first catalyst layer 20 is in the form capable of functioning as a catalytically-active component, for example, in the form of a catalytically-active component containing the noble metal element, such as metal, an alloy containing the noble metal element, a compound containing the noble metal element (e.g., an oxide of the noble metal element), or the like. From the viewpoint of improving the exhaust gas purification performance, it is preferable that the catalytically-active component containing the noble metal element is in particulate form.

From the viewpoint of balancing the exhaust gas purification performance and the cost, the content of the noble metal element in terms of metal in the first catalyst layer 20 is preferably 0.1 % by mass or more and 10% by mass or less, more preferably 0.2% by mass or more and 9% by mass or less, and still more preferably 0.3% by mass or more and 8% by mass or less, based on the mass of the first catalyst layer 20. The expression "the content of the noble metal element in terms of metal in the first catalyst layer 20" means, in the case where the first catalyst layer 20 contains one noble metal element, the content of the one noble metal element in terms of metal, and means, in the case where the first catalyst layer 20 contains two or more noble metal elements, the total content of the two or more noble metal elements in terms of metal.

The first catalyst layer 20 preferably contains Pd and/or Pt.

Since the first catalyst layer 20 is provided on the upstream side of the second catalyst layer 30, the temperature of the exhaust gas that comes into contact with the first catalyst layer 20 tends to be higher than that of the exhaust gas that comes into contact with the second catalyst layer 30. Therefore, the first catalyst layer 20 preferably contains Pd, since Pd exhibits excellent heat resistance. The first catalyst layer 20 may further contain Pt in addition to Pd.

From the viewpoint of balancing the exhaust gas purification performance and the cost, the content of Pd in terms of metal in the first catalyst layer 20 is preferably 0.1% by mass or more and 10% by mass or less, more preferably 0.2% by mass or more and 9% by mass or less, and still more preferably 0.3% by mass or more and 8% by mass or less, based on the mass of the first catalyst layer 20.

From the viewpoint of balancing the exhaust gas purification performance and the cost, the content of Pt in terms of metal in the first catalyst layer 20 is preferably 0.1% by mass or more and 10% by mass or less, more preferably 0.2% by mass or more and 9% by mass or less, and still more preferably 0.3% by mass or more and 8% by mass or less, based on the mass of the first catalyst layer 20.

The content of each metal element in terms of metal in the first catalyst layer 20 is determined from the formula: (Mass of each metal element in terms of metal in first catalyst layer 20) / (Mass of first catalyst layer 20) x 100. For example, the content of Pd in terms of metal in the first catalyst layer 20 is determined from the formula: (Mass of Pd in terms of metal in first catalyst layer 20) / (Mass of first catalyst layer 20) x 100.

In the case where the composition of raw materials used for forming the first catalyst layer 20 is known, the content of each metal element in terms of metal in the first catalyst layer 20 can be determined from the composition of raw materials used for forming the first catalyst layer 20.

In the case where the composition of raw materials used for forming the first catalyst layer 20 is not known, the content of each metal element in terms of metal in the first catalyst layer 20 can be determined using a conventional method such as SEM-EDX. A specific example is as mentioned below.

Elemental analysis using a conventional method such as SEM-EDX is performed on a sample obtained from the first catalyst layer 20 to identify the types of constituent elements of the entire sample and determine the content (% by mass) of each identified element. From each of 10 fields of view in SEM, the content (% by mass) of each metal element is determined. The average of the contents (% by mass) of each metal element obtained from the 10 fields of view is defined as the content (% by mass) of each metal element in the first catalyst layer 20.

The first catalyst layer 20 contains a Ce-Zr-based complex oxide. The Ce-Zr-based complex oxide has an oxygen storage capacity. Therefore, the inclusion of the Ce-Zr-based complex oxide in the first catalyst layer 20 enables the catalyst 1A to sufficiently exhibit its exhaust gas purification performance even when the oxygen concentration in exhaust gas fluctuates.

From the viewpoint of improving the heat resistance and the oxygen storage capacity of the Ce-Zr-based complex oxide, the total content of Ce in terms of $CeO_2$ and Zr in terms of $ZrO_2$ in the Ce-Zr-based complex oxide is preferably 70% by mass or more, more preferably 75% by mass or more, still more preferably 80% by mass or more, and still more preferably 85% by mass or more, based on the mass of the Ce-Zr-based complex oxide. The upper limit is 100% by mass.

From the viewpoint of improving the oxygen storage capacity of the Ce-Zr-based complex oxide, the content of Ce in terms of $CeO_2$ in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide.

From the viewpoint of improving the heat resistance of the Ce-Zr-based complex oxide, the content of Zr in terms of $ZrO_2$ in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide.

From the viewpoint of improving the exhaust gas purification performance of the catalyst 1A, the content of the Ce-Zr-based complex oxide in the first catalyst layer 20 is preferably 50% by mass or more, more preferably 60% by mass or more, still more preferably 70% by mass or more, and still more preferably 80% by mass or more, based on the mass of the first catalyst layer 20. The upper limit can be appropriately adjusted in consideration of the content of other components in the first catalyst layer 20. The content of the Ce-Zr-based complex oxide in the first catalyst layer 20 can be adjusted to, for example, 99% by mass or less, 95% by mass or less, 93% by mass or less, or 90% by mass or less, based on the mass of the first catalyst layer 20. Each of these upper limits may be combined with any of the above-mentioned lower limits.

In the case where the composition of raw materials used for forming the first catalyst layer 20 is known, the content of the Ce-Zr-based complex oxide in the first catalyst layer 20 can be determined from the composition of raw materials used for forming the first catalyst layer 20.

In the case where the composition of raw materials used for forming the first catalyst layer 20 is not known, the content of the Ce-Zr-based complex oxide in the first catalyst layer 20 can be determined using a conventional method such as SEM-EDX. A specific example is as mentioned below.

(1) Elemental analysis using a conventional method such as SEM-EDX is performed on a sample obtained from the first catalyst layer 20 to identify the types of constituent elements of the entire sample and determine the content (% by mass) of each identified element.

(2) Elemental mapping using a conventional method such as SEM-EDX is performed on a sample obtained from the first catalyst layer 20 to identify the types of particles contained in the sample (e.g., a Ce-Zr-based complex oxide particle, and optionally other particle(s)).

(3) For each type of particle, elemental analysis by SEM-EDX is performed on a plurality of arbitrarily selected particles (for example, 50 particles) to identify the types of constituent elements of the particles and to determine the content (% by mass) of each identified element. For each type of particle, the average value of the content (% by mass) of each element is determined.

(4) The content (% by mass) of each type of particle in the sample is calculated by drawing up and solving equations representing the relationship among the content (% by mass) of each element in the sample, the content (% by mass) of each element in each type of particle, and the content (% by mass) of each type of particle in the sample, and is defined as the content (% by mass) of each type of particle in the first catalyst layer 20.

The first catalyst layer 20 may contain $Al_2O_3$.

In the case where the first catalyst layer 20 contains $Al_2O_3$, the first catalyst layer 20 contains one Al source or two or more Al sources. Each $Al_2O_3$ source is not particularly limited as long as it is an oxide containing Al. Each $Al_2O_3$ source can be selected from, for example, an Al-based oxide, a Ce-based oxide containing Al, a Ce-Zr-based complex oxide containing Al, an alumina binder, and the like.

In one embodiment, the first catalyst layer 20 contains an alumina binder as an $Al_2O_3$ source. The first catalyst layer 20 may contain only an alumina binder as an $Al_2O_3$ source, or may contain one additional $Al_2O_3$ source or two or more additional $Al_2O_3$ sources besides the alumina binder.

From the viewpoint of more effectively achieving the improvement in the warm-up efficiency of the first catalyst layer 20, which is required when the environment in which the catalyst 1A is placed is a low temperature environment immediately after start-up of the internal combustion engine, the content of Al in terms of $Al_2O_3$ in the first catalyst layer 20 is preferably 10% by mass or less, more preferably 5% by mass or less, and still more preferably 3% by mass or less, based on the mass of the first catalyst layer 20. The lower limit can be appropriately adjusted in consideration of the content of other components in the first catalyst layer 20. The content of Al in terms of $Al_2O_3$ in the first catalyst layer 20 may be, for example, 0% by mass, 0.1% by mass or more, 1% by mass or more, or 2% by mass or more, based on the mass of the first catalyst layer 20. Each of these lower limits may be combined with any of the above-described upper limits. The expression "the content of Al in terms of $Al_2O_3$ in the first catalyst layer 20" means, in the case where the first catalyst layer 20 contains one $Al_2O_3$ source, the content of Al derived from the one $Al_2O_3$ source in terms of $Al_2O_3$, and means, in the case where the first catalyst layer 20 contains two or more $Al_2O_3$ sources, the total content of Al derived from the two or more $Al_2O_3$ sources in terms of $Al_2O_3$.

In the case where the composition of raw materials used for forming the first catalyst layer 20 is known, the content of Al in terms of $Al_2O_3$ in the first catalyst layer 20 can be determined from the composition of raw materials used for forming the first catalyst layer 20.

In the case where the composition of raw materials used for forming the first catalyst layer 20 is not known, the content of Al in terms of $Al_2O_3$ in the first catalyst layer 20 can be determined using a conventional method such as SEM-EDX. A specific example is as mentioned below.

Elemental analysis using a conventional method such as SEM-EDX is performed on a sample obtained from the first catalyst layer 20 to identify the types of constituent elements of the entire sample and determine the content (% by mass) of Al in terms of $Al_2O_3$. From each of 10 fields of view in SEM, the content (% by mass) of Al in terms of $Al_2O_3$ is determined. The average of the contents (% by mass) of Al in terms of $Al_2O_3$ obtained from the 10 fields of view is defined as the content (% by mass) of Al in terms of $Al_2O_3$ in the first catalyst layer 20.

The first catalyst layer 20 may contain one carrier other than the Ce-Zr-based complex oxide, or two or more carriers other than the Ce-Zr-based complex oxide.

Each carrier other than the Ce-Zr-based complex oxide can be selected from, for example, an inorganic oxide other than the Ce-Zr-based complex oxide. The inorganic oxide other than the Ce-Zr-based complex oxide is, for example, in particulate form. From the viewpoint of improving the supportability for a catalytically-active component, the inorganic oxide other than the Ce-Zr-based complex oxide is preferably porous. In the case where the first catalyst layer 20 contains an inorganic oxide other than the Ce-Zr-based complex oxide as a carrier, the inorganic oxide may or may not have an oxygen storage capacity. In the present specification, an inorganic oxide having oxygen storage capacity (OSC) may be referred to as an "OSC material".

The inorganic oxide other than the Ce-Zr-based complex oxide, used as a carrier, is distinct from an inorganic oxide used as a binder (e.g., an inorganic oxide binder such as an alumina binder, a zirconia binder, a titania binder, a silica binder, or the like).

Examples of the inorganic oxide other than the Ce-Zr-based complex oxide, used as a carrier, include an Al-based oxide, a Ce-based oxide, an oxide of a rare earth element other than Ce, zirconia ($ZrO_2$), silica ($SiO_2$), titania ($TiO_2$), zeolite (aluminosilicate), an oxide based on MgO, ZnO, or $SnO_2$, and the like.

It is preferable that at least part of a catalytically-active component is supported on the Ce-Zr-based complex oxide. In the case where the first catalyst layer 20 contains a carrier other than the Ce-Zr-based complex oxide, at least part of a catalytically-active component may be supported on the carrier other than the Ce-Zr-based complex oxide.

The expression that "at least part of a catalytically-active component is supported on a carrier" means the state where at least part of the catalytically-active component is physically and/or chemically adsorbed and/or retained in the outer surface of the carrier and/or the inner surface of pores of the carrier. Whether at least part of a catalytically-active component is supported on a carrier can be confirmed using, for example, SEM-EDX or the like. Specifically, when an element mapping obtained by analyzing a cross section of the first catalyst layer 20 by SEM-EDX shows that at least part of a catalytically-active component and a carrier exist in the same region, at least part of the catalytically-active component can be judged as supported on the carrier.

The first catalyst layer 20 may contain components such as a binder, a stabilizer, and the like. Examples of the binder include inorganic oxide binders such as alumina sol, ceria sol, zirconia sol, titania sol, and silica sol. Examples of the stabilizer include a nitrate, a carbonate, an oxide, or a sulfate of an alkaline earth metal element (e.g., Sr, Ba, etc.).

Among components in the first catalyst layer 20, Ce primarily contributes to the oxygen storage capacity. Therefore, from the viewpoint of enabling the catalyst 1A to sufficiently exhibit its exhaust gas purification performance even when the oxygen concentration in exhaust gas fluctuates, the content of Ce in terms of $CeO_2$ in the first catalyst layer 20 is preferably 32% by mass or more, and more preferably 35% by mass or more, based on the mass of the first catalyst layer 20. The upper limit can be appropriately adjusted in consideration of the content of other components in the first catalyst layer 20. The content of Ce in terms of $CeO_2$ in the first catalyst layer 20 can be adjusted to, for example, 90% by mass or less, 80% by mass or less, 70% by mass or less, or 60% by mass or less, based on the mass of the first catalyst layer 20. Each of these upper limits may be combined with any of the above-described lower limits. The expression "the content of Ce in terms of $CeO_2$ in the first catalyst layer 20" means, in the case where the first catalyst layer 20 contains one Ce source, the content of Ce derived from the one Ce source in terms of $CeO_2$, and means, in the case where the first catalyst layer 20 contains two or more Ce sources, the total content of Ce derived from the two or more Ce sources in terms of $CeO_2$.

Each Ce source is not particularly limited as long as it is an oxide containing Ce. The first catalyst layer 20 contains a Ce-Zr-based complex oxide as a Ce source. The first catalyst layer 20 may contain one Ce source other than the Ce-Zr-based complex oxide, or two or more Ce sources other than the Ce-Zr-based complex oxide. Each Ce source other than the Ce-Zr-based complex oxide can be selected from, for example, an Al-based oxide containing Ce, a Ce-based oxide, a ceria binder, and the like.

From the viewpoint of improving the exhaust gas purification performance of the catalyst 1A, the proportion of the mass of Ce derived from the Ce-Zr-based complex oxide in terms of $CeO_2$ to the mass of Ce in terms of $CeO_2$ in the first catalyst layer 20 is preferably 50% by mass or more, more preferably 70% by mass or more, still more preferably 80% by mass or more, and still more preferably 90% by mass or more. The upper limit is 100% by mass.

In the case where the composition of raw materials used for forming the first catalyst layer 20 is known, the content of Ce in terms of $CeO_2$ in the first catalyst layer 20 can be determined from the composition of raw materials used for forming the first catalyst layer 20.

In the case where the composition of raw materials used for forming the first catalyst layer 20 is not known, the content of Ce in terms of $CeO_2$ in the first catalyst layer 20 can be determined using a conventional method such as SEM-EDX. A specific example is as mentioned below.

Elemental analysis using a conventional method such as SEM-EDX is performed on a sample obtained from the first catalyst layer 20 to identify the types of constituent elements of the entire sample and determine the content (% by mass) of Ce in terms of $CeO_2$. From each of 10 fields of view in SEM, the content (% by mass) of Ce in terms of $CeO_2$ is determined. The average of the contents (% by mass) of Ce in terms of $CeO_2$ obtained from the 10 fields of view is defined as the content (% by mass) of Ce in terms of $CeO_2$ in the first catalyst layer 20.

< Second catalyst layer >

Hereinafter, the second catalyst layer 30 will be described.

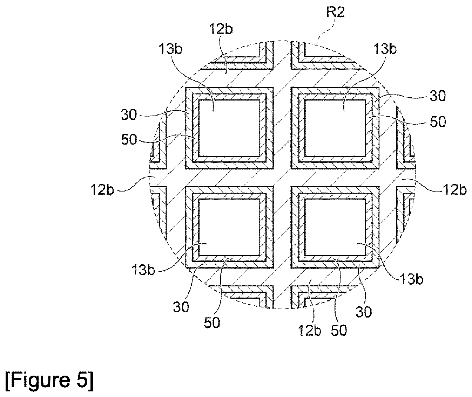

As shown in Figures 5 and 6, the second catalyst layer 30 is provided on the downstream side of the substrate 10 (i.e., on the second substrate part 10b). Specifically, the second catalyst layer 30 is provided on the surface on the cell 13b side of the partition wall 12b. The expression "the surface on the cell 13b side of the partition wall 12b" means the outer surface of the partition wall 12b, the outer surface extending in the exhaust gas flow direction X. The second catalyst layer 30 may be provided directly on the surface on the cell 13b side of the partition wall 12b, or may be provided via another layer on the surface on the cell 13b side of the partition wall 12b. Usually, the second catalyst layer 30 is provided directly on the surface on the cell 13b side of the partition wall 12b.

The second catalyst layer 30 may be composed of a structure rising from the surface on the cell 13b side of the partition wall 12b toward the cell 13b side (hereinafter referred to as a "rising structure"), or may be composed of a structure present inside the partition wall 12b (hereinafter referred to as an "internal structure"), or may have both of the rising structure and the internal structure. The expression "the second catalyst layer 30 provided on the downstream side of the substrate 10" encompasses an embodiment wherein the second catalyst layer 30 is composed of the rising structure, an embodiment wherein the second catalyst layer 30 is composed of the internal structure, and an embodiment wherein the second catalyst layer 30 has both of the rising structure and the internal structure.

As shown in Figure 6, the second catalyst layer 30 extends from the end on the exhaust gas outflow side of the partition wall 12b to the end on the exhaust gas inflow side of the partition wall 12b along the direction opposite to the exhaust gas flow direction X. The second catalyst layer 30 may extend from the end on the exhaust gas outflow side of the partition wall 12b along the direction opposite to the exhaust gas flow direction X so as not to reach the end on the exhaust gas inflow side of the partition wall 12b, or may extend from the end on the exhaust gas inflow side of the partition wall 12b along the exhaust gas flow direction X so as not to reach the end on the exhaust gas outflow side of the partition wall 12b.

As shown in Figure 6, the second catalyst layer 30 is provided on the downstream side of the first catalyst layer 20. The expression that "the second catalyst layer 30 is provided on the downstream side of the first catalyst layer 20" means that the second catalyst layer 30 is located in a region on the downstream side of the region where the first catalyst layer 20 is provided, in the exhaust gas flow direction X.

As shown in Figure 6, the end on the exhaust gas inflow side of the second catalyst layer 30 is in contact with the end on the exhaust gas outflow side of the first catalyst layer 20 at the boundary S. As shown in Figure 6, the boundary S between the end on the exhaust gas outflow side of the first catalyst layer 20 and the end on the exhaust gas inflow side of the second catalyst layer 30 coincides with the boundary S between the end on the exhaust gas outflow side of the first substrate part 10a and the end on the exhaust gas inflow side of the second substrate part 10b.

The end on the exhaust gas inflow side of the second catalyst layer 30 may have a portion that overlaps with the end on the exhaust gas outflow side of the first catalyst layer 20 (i.e., a portion that is located on the upside of the end on the exhaust gas outflow side of the first catalyst layer 20 and covers the end on the exhaust gas outflow side of the first catalyst layer 20). Alternatively, the end on the exhaust gas outflow side of the first catalyst layer 20 may have a portion that overlaps with the end on the exhaust gas inflow side of the second catalyst layer 30 (i.e., a portion that is located on the upside of the end on the exhaust gas inflow side of the second catalyst layer 30 and covers the end on the exhaust gas inflow side of the second catalyst layer 30). These cases are also included in the expression that "the second catalyst layer 30 is provided on the downside of the first catalyst layer 20".

The end on the exhaust gas inflow side of the second catalyst layer 30 does not necessarily have to be in contact with the end on the exhaust gas outflow side of the first catalyst layer 20. In other words, a gap may be formed between the end on the exhaust gas outflow side of the first catalyst layer 20 and the end on the exhaust gas inflow side of the second catalyst layer 30.

From the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the mass (mass after calcining) of the second catalyst layer 30 per unit volume of the portion of the substrate 10 provided with the second catalyst layer 30, namely, the mass (mass after calcining) of the second catalyst layer 30 per unit volume of the portion of the second substrate part 10b provided with the second catalyst layer 30 is preferably 60 g/L or more and 200 g/L or less, more preferably 80 g/L or more and 200 g/L or less, and still more preferably 100 g/L or more and 190 g/L or less. The mass of the second catalyst layer 30 per unit volume of the portion of the second substrate part 10b provided with the second catalyst layer 30 is calculated from the formula: (Mass of second catalyst layer 30) / ((Volume of second substrate part 10b) x (Average length L30 of second catalyst layer 30 / Length L10b of second substrate part 10b)). The term "length" means the dimension in the axial direction of the second substrate part 10b.

The above descriptions with respect to the mass of the first catalyst layer 20 are also applied to the mass of the second catalyst layer 30. Upon application, "the first catalyst layer 20" is replaced with "the second catalyst layer 30".

The above descriptions with respect to the method of measuring the average length L20 of the first catalyst layer 20 are also applied to the method of measuring the average length L30 of the second catalyst layer 30. Upon application, "the first catalyst layer 20" and "the average length L20" are replaced with "the second catalyst layer 30" and "the average length L30", respectively.

From the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the percentage of the average length L30 of the second catalyst layer 30 relative to the length L10b of the second substrate part 10b (L30 / L10b x 100) is preferably 80% or more, more preferably 90% or more, and still more preferably 95% or more. The upper limit may be 100% or may be more than 100%. In the case where the end on the exhaust gas inflow side of the second catalyst layer 30 has a portion that overlaps with the end on the exhaust gas outflow side of the first catalyst layer 20 as mentioned above, the percentage can be more than 100%. In the case where the percentage is more than 100%, the upper limit of the percentage is preferably 500% or less, more preferably 350% or less, and still more preferably 200% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

From the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the percentage of the average length L30 of the second catalyst layer 30 relative to the total of the length L10a of the first substrate part 10a and the length L10b of the second substrate part 10b (L30 / (L10a + L10b) x 100) is preferably 20% or more and 95% or less, more preferably 30% or more and 92% or less, and still more preferably 40% or more and 90% or less.

From the viewpoint of more effectively achieving the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine, the percentage of the total of the average length L20 of the first catalyst layer 20 and the average length L30 of the second catalyst layer 30 relative to the total of the length L10a of the first substrate part 10a and the length L10b of the second substrate part 10b ((L20 + L30) / (L10a + L10b) x 100) is preferably 35% or more, more preferably 48% or more, and still more preferably 60% or more. The upper limit may be 100% or may be more than 100%. In the case where the end on the exhaust gas outflow side of the first catalyst layer 20 has a portion that overlaps with the end on the exhaust gas inflow side of the second catalyst layer 30 as mentioned above, and the case where the end on the exhaust gas inflow side of the second catalyst layer 30 has a portion that overlaps with the end on the exhaust gas outflow side of the first catalyst layer 20 as mentioned above, the percentage can be more than 100%. The upper limit of the percentage is preferably 175% or less, more preferably 162% or less, and still more preferably 150% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

From the viewpoint of more effectively achieving the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine, the ratio of the mass of the first catalyst layer 20 per unit volume of the portion of the substrate 10 provided with the first catalyst layer 20 (i.e., the mass of the first catalyst layer 20 per unit volume of the portion of the first substrate part 10a provided with the first catalyst layer 20) to the mass of the second catalyst layer 30 per unit volume of the portion of the substrate 10 provided with the second catalyst layer 30 (i.e., the mass of the second catalyst layer 30 per unit volume of the portion of the second substrate part 10b provided with the second catalyst layer 30) is preferably 0.95 or less, more preferably 0.93 or less, and still more preferably 0.90 or less. From the same viewpoint, the ratio is preferably 0.30 or more, and more preferably 0.40 or more. Each of these lower limits may be combined with any of the above-described upper limits.

From the viewpoint of more effectively achieving the improvement in the warm-up efficiency of the first catalyst layer 20, which is required when the environment in which the catalyst 1A is placed is a low temperature environment immediately after start-up of the internal combustion engine, and the suppression of the decrease in the degree of dispersion of a catalytically-active component after exposure to a high temperature environment, which is required when the environment in which the catalyst 1A is placed is a high temperature environment during high-speed operation of the internal combustion engine, the ratio of the average length L20 of the first catalyst layer 20 to the average length L30 of the second catalyst layer 30 is preferably 1.0 or less, more preferably 0.8 or less, and still more preferably 0.7 or less. From the same viewpoint, the ratio is preferably 0.3 or more, more preferably 0.4 or more, and still more preferably 0.5 or more. Each of these lower limits may be combined with any of the above-described upper limits.

The second catalyst layer 30 contains one noble metal element a catalytically-active component, or two or more noble metal elements as catalytically-active components. Each noble metal element can be selected from, for example, Pd, Pt, Rh, Au, Ag, Ir, Ru, Os, and the like. Each noble metal element contained in the second catalyst layer 30 is in the form capable of functioning as a catalytically-active component, for example, in the form of a catalytically-active component containing the noble metal element, such as metal, an alloy containing the noble metal element, a compound containing the noble metal element (e.g., an oxide of the noble metal element), or the like. From the viewpoint of improving the exhaust gas purification performance, it is preferable that the catalytically-active component containing the noble metal element is in particulate form.

From the viewpoint of balancing the exhaust gas purification performance and the cost, the content of the noble metal element in terms of metal in the second catalyst layer 30 is preferably 0.01% by mass or more and 5% by mass or less, more preferably 0.02% by mass or more and 4% by mass or less, and still more preferably 0.03% by mass or more and 3% by mass or less, based on the mass of the second catalyst layer 30. The expression "the content of the noble metal element in terms of metal in the second catalyst layer 30" means, in the case where the second catalyst layer 30 contains one noble metal element, the content of the one noble metal element in terms of metal, and means, in the case where the second catalyst layer 30 contains two or more noble metal elements, the total content of the two or more noble metal elements in terms of metal.

The second catalyst layer 30 preferably contains Pd and/or Pt.

From the viewpoint of balancing the exhaust gas purification performance and the cost, the content of Pd in terms of metal in the second catalyst layer 30 is preferably 0.01% by mass or more and 5% by mass or less, more preferably 0.02% by mass or more and 4% by mass or less, and still more preferably 0.03% by mass or more and 3% by mass or less, based on the mass of the second catalyst layer 30.

From the viewpoint of balancing the exhaust gas purification performance and the cost, the content of Pt in terms of metal in the second catalyst layer 30 is preferably 0.01% by mass or more and 5% by mass or less, more preferably 0.02% by mass or more and 4% by mass or less, and still more preferably 0.03% by mass or more and 3% by mass or less, based on the mass of the second catalyst layer 30.

The content of each metal element in terms of metal in the second catalyst layer 30 is determined from the following formula: (Mass of each metal element in terms of metal in second catalyst layer 30) / (Mass of second catalyst layer 30) x 100. For example, the content of Pd in terms of metal in the second catalyst layer 30 is determined from the following formula: (Mass of Pd in terms of metal in second catalyst layer 30) / (Mass of second catalyst layer 30) x 100.

The content of each metal element in terms of metal in the second catalyst layer 30 can be determined in the same manner as the content of each metal element in terms of metal in the first catalyst layer 20.

The second catalyst layer 30 contains $Al_2O_3$. Therefore, the second catalyst layer 30 contains one $Al_2O_3$ source or two or more $Al_2O_3$ sources.

Each $Al_2O_3$ source is not particularly limited as long as it is an oxide containing Al. Each $Al_2O_3$ source can be selected from, for example, an Al-based oxide, a Ce-based oxide containing Al, a Ce-Zr-based complex oxide containing Al, an alumina binder, and the like.

The second catalyst layer 30 preferably contains an Al-based oxide as an $Al_2O_3$ source. The second catalyst layer 30 may contain, in addition to the Al-based oxide, one other $Al_2O_3$ source or two or more other $Al_2O_3$ sources. In one embodiment, the second catalyst layer 30 contains an Al-based oxide and an alumina binder as $Al_2O_3$ sources.

From the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the content of Al in terms of $Al_2O_3$ in the second catalyst layer 30 is preferably 1% by mass or more, more preferably 3% by mass or more, still more preferably 5% by mass or more, and still more preferably 10% by mass or more, based on the mass of the second catalyst layer 30. The upper limit can be appropriately adjusted in consideration of the content of other components in the second catalyst layer 30. The content of Al in terms of $Al_2O_3$ in the second catalyst layer 30 is, for example, 90% by mass or less, 80% by mass or less, 70% by mass or less, or 60% by mass or less, based on the mass of the second catalyst layer 30. Each of these upper limits may be combined with any of the above-described lower limits. The expression "the content of Al in terms of $Al_2O_3$ in the second catalyst layer 30" means, in the case where the second catalyst layer 30 contains one $Al_2O_3$ source, the content of Al derived from the one $Al_2O_3$ source in terms of $Al_2O_3$, and means, in the case where the second catalyst layer 30 contains two or more $Al_2O_3$ sources, the total content of Al derived from the two or more $Al_2O_3$ source in terms of $Al_2O_3$.

From the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the proportion of the mass of Al derived from the Al-based oxide in terms of $Al_2O_3$ to the mass of Al in terms of $Al_2O_3$ in the second catalyst layer 30 is preferably 50% by mass or more, more preferably 70% by mass or more, still more preferably 80% by mass or more, and still more preferably 90% by mass or more. The upper limit is 100% by mass.

The content of Al in terms of $Al_2O_3$ in the second catalyst layer 30 can be determined in the same manner as the content of Al in terms of $Al_2O_3$ in the first catalyst layer 20.

Since the effect of $Al_2O_3$ in the second catalyst layer 30 is to suppress the decrease in the degree of dispersion of a catalytically-active component after exposure to a high temperature environment, the mass content of the noble metal element in terms of metal in the second catalyst layer 30 is preferably adjusted to be proportional to the mass content of Al in terms of $Al_2O_3$ in the second catalyst layer 30. In other words, from the viewpoint of more effectively achieving the suppression of the decrease in the degree of dispersion of a catalytically-active component after exposure to a high temperature environment, which is required when the environment in which the catalyst 1A is placed is a high temperature environment during high-speed operation of the internal combustion engine, the ratio of the mass content of Al in terms of $Al_2O_3$ in the second catalyst layer 30 to the mass content of the noble metal element in terms of metal in the second catalyst layer 30 is preferably 50 or more and 600 or less, more preferably 100 or more and 500 or less, still more preferably 120 or more and 400 or more, and still more preferably 150 or more and 250 or less.

The second catalyst layer 30 preferably contains one carrier or two or more carriers. Each carrier can be selected from, for example, a Ce-Zr-based complex oxide and an inorganic oxide other than the Ce-Zr-based complex oxide (e.g.,

an Al-based oxide). The descriptions with respect to the Ce-Zr-based complex oxide and the inorganic oxide other than the Ce-Zr-based complex oxide are the same as described above.

The second catalyst layer 30 preferably contains an Al-based oxide as a carrier. The Al-based oxide also qualifies as an $Al_2O_3$ source. The second catalyst layer 30 may contain one or two or more additional carriers other than the Al-based oxide. In one embodiment, the second catalyst layer 30 contains, in addition to the Al-based oxide, an OSC material as a carrier. The OSC material can be selected from, for example, a Ce-based oxide and a Ce-Zr-based complex oxide. The Ce-Zr complex oxide is preferred.

It is preferable that at least part of a catalytically-active component is supported on a carrier. In the case where the second catalyst layer 30 contains an Al-based oxide, it is preferable that at least part of a catalytically-active component is supported on the Al-based oxide. In the case where the second catalyst layer 30 contains a carrier other than the Al-based oxide, it is preferable that at least part of a catalytically-active component is supported on the carrier other than the Al-based oxide. The meaning of the expression that "at least part of a catalytically-active component is supported on a carrier" and the confirmation method thereof are the same as described above.

The second catalyst layer 30 may contain components such as a binder, a stabilizer, and the like. Examples of the binder include inorganic oxide binders such as alumina sol, ceria sol, zirconia sol, titania sol, and silica sol. Examples of the stabilizer include nitrate, carbonate, oxide, or sulfate of an alkaline earth metal element (e.g., Sr, Ba, or the like).

Among components in the second catalyst layer 30, Ce primarily contributes to the oxygen storage capacity. Therefore, from the viewpoint of improving the exhaust gas purification performance of the catalyst 1A, the content of Ce in terms of $CeO_2$ in the second catalyst layer 30 is preferably 5% by mass or more, more preferably 10% by mass or more, still more preferably 20% by mass or more, and still more preferably 30% by mass or more, based on the mass of the second catalyst layer 30. The upper limit can be appropriately adjusted in consideration of, for example, the content of other components in the second catalyst layer 30. The content of Ce in terms of $CeO_2$ in the second catalyst layer 30 can be adjusted to, for example, 90% by mass or less, 80% by mass or less, 70% by mass or less, or 60% by mass or less, based on the mass of the second catalyst layer 30. Each of these upper limits may be combined with any of the above-described lower limits. The expression "the content of Ce in terms of $CeO_2$ in the second catalyst layer 30" means, in the case where the second catalyst layer 30 contains one Ce source, the content of Ce derived from the one Ce source in terms of $CeO_2$, and means, in the case where the second catalyst layer 30 contains two or more Ce sources, the total content of Ce derived from the two or more Ce sources in terms of $CeO_2$.

Each Ce source is not particularly limited as long as it is an oxide containing Ce. Each Ce source can be selected from, for example, an Al-based oxide containing Ce, a Ce-based oxide, a Ce-Zr-based complex oxide, a ceria binder, and the like. The Ce-Zr complex oxide is preferred.

From the viewpoint of improving the exhaust gas purification performance of the catalyst 1A, the proportion of the mass of Ce derived from the Ce-Zr-based complex oxide in terms of $CeO_2$ to the mass of Ce in terms of $CeO_2$ in the second catalyst layer 30 is preferably 50% by mass or more, more preferably 70% by mass or more, still more preferably 80% by mass or more, and still more preferably 90% by mass or more. The upper limit is 100% by mass.

The content of Ce in terms of $CeO_2$ in the second catalyst layer 30 can be determined in the same manner as the content of Ce in terms of $CeO_2$ in the first catalyst layer 20.

< Third catalyst layer and Fourth catalyst layer >

As shown in Figures 4 to 6, the third catalyst layer 40 is provided on the upside of the first catalyst layer 20, and the fourth catalyst layer 50 is provided on the upside of the second catalyst layer 30.

The third catalyst layer 40 and the fourth catalyst layer 50 are provided as necessary, and can be omitted. The present invention also encompasses an embodiment wherein one or both of the third catalyst layer 40 and the fourth catalyst layer 50 is/are omitted from the catalyst 1A. However, from the viewpoint of improving the exhaust gas purification performance, it is preferable that one or both of the third catalyst layer 40 and the fourth catalyst layer 50 is/are provided. Specifically, when the third catalyst layer 40 is provided, phosphorus poisoning of the noble metal element in the first catalyst layer 20 can be suppressed, and when the fourth catalyst layer 50 is provided, phosphorus poisoning of the noble metal element in the second catalyst layer 30 can be suppressed. Pd and Pt, especially Pd, are easily poisoned by phosphorus. Therefore, when the first catalyst layer 20 contains Pd and/or Pt, the third catalyst layer 40 is preferably provided, and when the second catalyst layer 30 contains Pd and/or Pt, the fourth catalyst layer 50 is preferably provided.

The expression that "the third catalyst layer 40 is provided on the upside of the first catalyst layer 20" means that part or the whole of the third catalyst layer 40 is present on, of two main surfaces of the first catalyst layer 20, the main surface opposite to the main surface on the partition wall 12a side. The expression "the main surface of the first catalyst layer 20" means the outer surface of the first catalyst layer 20, the outer surface extending in the exhaust gas flow direction X. The third catalyst layer 40 may be provided directly on the main surface of the first catalyst layer 20, or may be provided via another layer on the main surface of the first catalyst layer 20. Usually, the third catalyst layer 40 is provided directly on the main surface of the first catalyst layer 20. The third catalyst layer 40 may be provided to cover part or the whole of the main surface of the first catalyst layer 20. The expression "the third catalyst layer 40 provided on the upside of the first catalyst layer 20" encompasses an embodiment wherein the third catalyst layer 40 is provided directly on the main surface of the first catalyst layer 20, and an embodiment wherein the third catalyst layer 40 is provided via another layer on the main surface of the first catalyst layer 20.

The expression "the fourth catalyst layer 50 is provided on the upside of the second catalyst layer 30" means that part or the whole of the fourth catalyst layer 50 is present on, of two main surfaces of the second catalyst layer 30, the main surface opposite to the main surface on the partition wall 12b side. The expression "the main surface of the second catalyst layer 30" means the outer surface of the second catalyst layer 30, the outer surface extending in the exhaust gas flow direction X. The fourth catalyst layer 50 may be provided directly on the main surface of the second catalyst layer 30, or may be provided via another layer on the main surface of the second catalyst layer 30. Usually, the fourth catalyst layer 50 is provided directly on the main surface of the second catalyst layer 30. The fourth catalyst layer 50 may be provided to cover part or the whole of the main surface of the second catalyst layer 30. The expression "the fourth catalyst layer 50 provided on the upside of the second catalyst layer 30" encompasses an embodiment wherein the fourth catalyst layer 50 is provided directly on the main surface of the second catalyst layer 20, and an embodiment wherein the fourth catalyst layer 50 is provided via another layer on the main surface of the second catalyst layer 30.

As shown in Figure 6, the third catalyst layer 40 extends from the end on the exhaust gas inflow side of the partition wall 12a to the end on the exhaust gas outflow side of the partition wall 12a along the exhaust gas flow direction X. The third catalyst layer 40 may extend from the end on the exhaust gas inflow side of the partition wall 12a along the exhaust gas flow direction X so as not to reach the end on the exhaust gas outflow side of the partition wall 12a, or may extend from the end on the exhaust gas outflow side of the partition wall 12a along the direction opposite to the exhaust gas flow direction X so as not to reach the end on the exhaust gas inflow side of the partition wall 12a.

As shown in Figure 6, the fourth catalyst layer 50 extends from the end on the exhaust gas outflow side of the partition wall 12b to the end on the exhaust gas inflow side of the partition wall 12b along the direction opposite to the exhaust gas flow direction X. The fourth catalyst layer 50 may extend from the end on the exhaust gas outflow side of the partition wall 12b along the direction opposite to the exhaust gas flow direction X so as not to reach the end on the exhaust gas inflow side of the partition wall 12b, or may extend from the end on the exhaust gas inflow side of the partition wall 12b along the exhaust gas flow direction X so as not to reach the end on the exhaust gas outflow side of the partition wall 12b.

From the viewpoint of balancing the exhaust gas purification performance and the cost, the mass (mass after calcining) of the third catalyst layer 40 per unit volume of the portion of the substrate 10 provided with the third catalyst layer 40, namely, the mass (mass after calcining) of the third catalyst layer 40 per unit volume of the portion of the first substrate part 10a provided with the third catalyst layer 40 is preferably 30 g/L or more and 150 g/L or less, more preferably 40 g/L or more and 140 g/L or less, and still more preferably 50 g/L or more and 130 g/L or less. The mass of the third catalyst layer 40 per unit volume of the portion of the first substrate part 10a provided with the third catalyst layer 40 is calculated from the formula: (Mass of third catalyst layer 40) / ((Volume of first substrate part 10a) x (Average length L40 of third catalyst layer 40 / Length L10a of first substrate part 10a)).

From the viewpoint of balancing the exhaust gas purification performance and the cost, the mass (mass after calcining) of the fourth catalyst layer 50 per unit volume of the portion of the substrate 10 provided with the fourth catalyst layer 50, namely, the mass (mass after calcining) of the fourth catalyst layer 50 per unit volume of the portion of the second substrate part 10b provided with the fourth catalyst layer 50 is preferably 30 g/L or more and 150 g/L or less, more preferably 40 g/L or more and 140 g/L or less, and still more preferably 50 g/L or more and 130 g/L or less. The mass of the fourth catalyst layer 50 per unit volume of the portion of the second substrate part 10b provided with the fourth catalyst layer 50 is calculated from the formula:

(Mass of fourth catalyst layer 50) / ((Volume of second substrate part 10b) x (Average length L50 of fourth catalyst layer 50 / Length L10b of second substrate part 10b)).

From the viewpoint of balancing the exhaust gas purification performance and the cost, the total mass of the third catalyst layer 40 and the fourth catalyst layer 50, relative to the total volume of the portion of the first substrate part 10a provided with the third catalyst layer 40 and the portion of the second substrate part 10b provided with the fourth catalyst layer 50, is preferably 30 g/L or more and 150 g/L or less, more preferably 40 g/L or more and 140 g/L or less, and still more preferably 50 g/L or more and 130 g/L or less.

The above descriptions with respect to the mass of the first catalyst layer 20 are also applied to the mass of the third catalyst layer 40 and the mass of the fourth catalyst layer 50, respectively. Upon application, "the first catalyst layer 20" is replaced with "the third catalyst layer 40" and "the fourth catalyst layer 50", respectively.

The above descriptions with respect to the method of measuring the average length L20 of the first catalyst layer 20 are also applied to the method of measuring the average length L40 of the third catalyst layer 40 and the average length L50 of the fourth catalyst layer 50, respectively. Upon application, "the first catalyst layer 20" is replaced with "the third catalyst layer 40" and "the fourth catalyst layer 50", respectively, and "the average length L20" is replaced with "the average length L40" and "the average length L50", respectively.

From the viewpoint of balancing the exhaust gas purification performance and the cost, the percentage of the average length L40 of the third catalyst layer 40 relative to the length L10a of the first substrate part 10a (L40 / L10a x 100) is preferably 80% or more, more preferably 90% or more, and still more preferably 95% or more. The upper limit may be 100%, or may be more than 100%. In the case where the end on the exhaust gas outflow side of the third catalyst layer 40 has a portion that overlaps with the end on the exhaust gas inflow side of the fourth catalyst layer 50 as mentioned below, the percentage can be more than 100%. When the percentage is more than 100%, the upper limit of the percentage is preferably 600% or less, more preferably 400% or less, and still more preferably 300% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

From the viewpoint of balancing the exhaust gas purification performance and the cost, the percentage of the average length L40 of the third catalyst layer 40 relative to the total of the length L10a of the first substrate part 10a and the length L10b of the second substrate part 10b (L40 / (L10a + L10b) x 100) is preferably 15% or more and 80% or less, more preferably 18% or more and 70% or less, and still more preferably 20% or more and 60% or less.

From the viewpoint of balancing the exhaust gas purification performance and the cost, the percentage of the average length L50 of the fourth catalyst layer 50 relative to the length L10b of the second substrate part 10b (L50 / L10b x 100) is preferably 80% or more, more preferably 90% or more, and still more preferably 95% or more. The upper limit may be 100%, or may be more than 100%. In the case where the end on the exhaust gas inflow side of the fourth catalyst layer 50 has a portion that overlaps with the end on the exhaust gas outflow side of the third catalyst layer 40 as mentioned below, the percentage can be more than 100%. When the percentage is more than 100%, the upper limit of the percentage is preferably 500% or less, more preferably 350% or less, and still more preferably 200% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

From the viewpoint of balancing the exhaust gas purification performance and the cost, the percentage of the average length L50 of the fourth catalyst layer 50 relative to the total of the length L10a of the first substrate part 10a and the length L10b of the second substrate part 10b (L50 / (L10a + L10b) x 100) is preferably 20% or more and 95% or less, more preferably 30% or more and 92% or less, and still more preferably 40% or more and 90% or less.

As shown in Figure 6, the end on the exhaust gas outflow side of the third catalyst layer 40 is in contact with the end on the exhaust gas inflow side of the fourth catalyst layer 50 at the boundary S. As shown in Figure 6, the boundary S between the end on the exhaust gas outflow side of the third catalyst layer 40 and the end on the exhaust gas inflow side of the fourth catalyst layer 50 coincides with the boundary S between the end on the exhaust gas outflow side of the first substrate part 10a and the end on the exhaust gas inflow side of the second substrate part 10b.

The end on the exhaust gas outflow side of the third catalyst layer 40 may have a portion that overlaps with the end on the exhaust gas inflow side of the fourth catalyst layer 50 (i.e., a portion that is located on the upside of the end on the exhaust gas inflow side of the fourth catalyst layer 50 and covers the end on the exhaust gas inflow side of the fourth catalyst layer 50). Alternatively, the end on the exhaust gas inflow side of the fourth catalyst layer 50 may have a portion that overlaps with the end on the exhaust gas outflow side of the third catalyst layer 40 (i.e., a portion that is located on the upside of the end on the exhaust gas outflow side of the third catalyst layer 40 and covers the end on the exhaust gas outflow side of the third catalyst layer 40).

In the case where the end on the exhaust gas outflow side of the third catalyst layer 40 is in contact with the end on the exhaust gas inflow side of the fourth catalyst layer 50 at the boundary S, the end on the exhaust gas outflow side of the third catalyst layer 40 may be continuous with the end on the exhaust gas inflow side of the fourth catalyst layer 50. In other words, the third catalyst layer 40 and the fourth catalyst layer 50 may be integrated to form a single catalyst layer.

The end on the exhaust gas outflow side of the third catalyst layer 40 does not necessarily have to be in contact with the end on the exhaust gas inflow side of the fourth catalyst layer 50. In other words, a gap may be formed between the end on the exhaust gas outflow side of the third catalyst layer 40 and the end on the exhaust gas inflow side of the fourth catalyst layer 50.

In one embodiment, the third catalyst layer 40 extends from the end on the exhaust gas inflow side of the partition wall 12a to the end on the exhaust gas outflow side of the partition wall 12a along the exhaust gas flow direction X, and the end on the exhaust gas outflow side of the third catalyst layer 40 is in contact with the end on the exhaust gas inflow side of the fourth catalyst layer 50 at the boundary S. In this embodiment, the end on the exhaust gas outflow side of the third catalyst layer 40 may be continuous with the end on the exhaust gas inflow side of the fourth catalyst layer 50. In this embodiment, the fourth catalyst layer 50 may extend from the end on the exhaust gas inflow side of the partition wall 12b to the end on the exhaust gas outflow side of the partition wall 12b along the exhaust gas flow direction X, or may extend from the end on the exhaust gas inflow side of the partition wall 12b along the exhaust gas flow direction X so as not to reach the end on the exhaust gas outflow side of the partition wall 12b.

In another embodiment, the fourth catalyst layer 50 extends from the end on the exhaust gas outflow side of the partition wall 12b to the end on the exhaust gas inflow side of the partition wall 12b along the direction opposite to the exhaust gas flow direction X, and the end on the exhaust gas outflow side of the third catalyst layer 40 is in contact with the end on the exhaust gas inflow side of the fourth catalyst layer 50 at the boundary S. In this embodiment, the end on the exhaust gas outflow side of the third catalyst layer 40 may be continuous with the end on the exhaust gas inflow side of the fourth catalyst layer 50. In this embodiment, the third catalyst layer 40 may extend from the end on the exhaust gas outflow side of the partition wall 12a to the end on the exhaust gas inflow side of the partition wall 12a along the direction opposite to the exhaust gas flow direction X, or may extend from the end on the exhaust gas outflow side of the partition wall 12a along the direction opposite to the exhaust gas flow direction X so as not to reach the end on the exhaust gas inflow side of the partition wall 12a.

From the viewpoint of balancing the exhaust gas purification performance and the cost, the percentage of the total of the average length L40 of the third catalyst layer 40 and the average length L50 of the fourth catalyst layer 50 relative to the total of the length L10a of the first substrate part 10a and the length L10b of the second substrate part 10b ((L40 + L50) / (L10a + L10b) x 100) is preferably 80% or more, more preferably 90% or more, and still more preferably 95% or more. The upper limit may be 100% or may be more than 100%. In the case where the end on the exhaust gas outflow side of the third catalyst layer 40 has a portion that overlaps with the end on the exhaust gas inflow side of the fourth catalyst layer 50 as mentioned above, and the case where the end on the exhaust gas inflow side of the fourth catalyst layer 50 has a portion that overlaps with the end on the exhaust gas outflow side of the third catalyst layer 40, the percentage can be more than 100%. The upper limit of the percentage is preferably 175% or less, more preferably 162% or less, and still more preferably 150% or less. In the case where the first substrate part 10a and the second substrate part 10b are integrally formed, and the case where the first substrate part 10a and the second substrate part 10b are separately formed and the end on the exhaust gas outflow side of the first substrate part 10a is in contact with the end on the exhaust gas inflow side of the second substrate part 10b, the percentage can be more than 100%, whereas in the case where the first substrate part 10a and the second substrate part 10b are separately formed and a gap is formed between the end on the exhaust gas outflow side of the first substrate part 10a and the end on the exhaust gas inflow side of the second substrate part 10b, the percentage is not more than 100%.

Hereafter, the common features of the third catalyst layer 40 and the fourth catalyst layer 50 will be described collectively. In the following descriptions, the expressions "catalyst layer 40, 50", "length L40, L50", "substrate part 10a, 10b", and "length L10a, L10b" are used. These expressions refer to "catalyst layer 40", "length L40", "substrate part 10a", and "length L10a" in relation to the third catalyst layer 40, and to "catalyst layer 50", "length L50", "substrate part 10b", and "length L10b" in relation to the fourth catalyst layer 50.

The catalyst layer 40, 50 contains one noble metal element as a catalytically-active component, or two or more noble metal elements as catalytically-active components. Each noble metal element can be selected from, for example, Pd, Pt, Rh, Au, Ag, Ir, Ru, Os, and the like. Each noble metal element contained in the catalyst layer 40, 50 is in the form capable of functioning as a catalytically-active component, for example, in the form of a catalytically-active component containing the noble metal element, such as metal, an alloy containing the noble metal element, a compound containing the noble metal element (e.g., an oxide of the noble metal element), or the like. From the viewpoint of improving the exhaust gas purification performance, it is preferable that the catalytically-active component containing the noble metal element is in particulate form.

From the viewpoint of balancing the exhaust gas purification performance and the cost, the content of the noble metal element in terms of metal in the catalyst layer 40, 50 is preferably 0.01% by mass or more and 5% by mass or less, more preferably 0.02% by mass or more and 3% by mass or less, and still more preferably 0.05% by mass or more and 2% by mass or less, based on the mass of the catalyst layer 40, 50. The expression "the content of the noble metal element in terms of metal in the catalyst layer 40, 50" means, in the case where the catalyst layer 40, 50 contains one noble metal element, the content of the one noble metal element in terms of metal, and means, in the case where the catalyst layer 40, 50 contains two or more noble metal elements, the total content of the two or more noble metal elements in terms of metal.

Since the catalyst layer 40 is provided on the upside of the first catalyst layer 20 and the catalyst layer 50 is provided on the upside of the second catalyst layer 30, the noble metal element in the catalyst layer 40, 50 is easily poisoned by phosphorus, compared to the noble metal elements in the first catalyst layer 20 and the second catalyst layer 30. Therefore, the catalyst layer 40, 50 preferably contains Rh, because Rh is a noble metal element that is not easily poisoned by phosphorus. In particular, in the case where the first catalyst layer 20 and the second catalyst layer contain Pd and/or Pt, the catalyst layer 40, 50 preferably contains Rh. When the first catalyst layer and the second catalyst layer contain Pd and/or Pt and the catalyst layer 40, 50 contains Rh, the exhaust gas purification performance of the catalyst 1A can be further improved.

From the viewpoint of balancing the exhaust gas purification performance and the cost, the content of Rh in terms of metal in the catalyst layer 40, 50 is preferably 0.01% by mass or more and 5% by mass or less, more preferably 0.02% by mass or more and 3% by mass or less, and still more preferably 0.05% by mass or more and 2% by mass or less, based on the mass of the catalyst layer 40, 50.

The content of each metal element in terms of metal in the catalyst layer 40, 50 is determined from the formula: (Mass of each metal element in terms of metal in catalyst layer 40, 50) / (Mass of catalyst layer 40, 50) x 100. For example, the content of Rh in terms of metal in the catalyst layer 40, 50 is determined from the formula: (Mass of Rh in terms of metal in catalyst layer 40, 50) / (Mass of catalyst layer 40, 50) x 100.

The content of each metal element in terms of metal in the catalyst layer 40, 50 can be determined in the same manner as the content of each metal element in terms of metal in the first catalyst layer 20.

The catalyst layer 40, 50 preferably contains one carrier or two or more carriers. Each carrier can be selected from, for example, an inorganic oxide and the like. The descriptions with respect to the inorganic oxide are the same as described above.

It is preferable that at least part of a catalytically-active component is supported on a carrier. The meaning of the expression that "at least part of a catalytically-active component is supported on a carrier" and the confirmation method thereof are the same as described above.

The catalyst layer 40, 50 may contain other components such as a binder, a stabilizer, and the like. Examples of the binder include inorganic oxide binders such as alumina sol, ceria sol, zirconia sol, titania sol, and silica sol. Examples of the stabilizer include nitrate, carbonate, oxide, or sulfate of an alkaline earth metal element (e.g., Sr, Ba, or the like).

The catalyst layer 40, 50 may contain $Al_2O_3$. In the case where the catalyst layer 40, 50 contains $Al_2O_3$, the catalyst layer 40, 50 contains one $Al_2O_3$ source or two or more $Al_2O_3$ sources.

From the viewpoint of improving the exhaust gas purification performance of the catalyst 1A, the content of Al in terms of $Al_2O_3$ in the catalyst layer 40, 50 is preferably 1% by mass or more, more preferably 10% by mass or more, and still more preferably 15% by mass or more, based on the mass of the catalyst layer 40, 50. The upper limit can be appropriately adjusted in consideration of the content of other components in the catalyst layer 40, 50. The content of Al in terms of $AlO_3$ in the catalyst layer 40, 50 is, for example, 80% by mass or less, 70% by mass or less, or 60% by mass or less, based on the mass of the catalyst layer 40, 50. Each of these upper limits may be combined with any of the above-described lower limits. The expression "the content of Al in terms of $Al_2O_3$ in the catalyst layer 40, 50" means, in the case where the catalyst layer 40, 50 contains one $Al_2O_3$ source, the content of Al derived from the one $Al_2O_3$ source in terms of $Al_2O_3$, and means, in the case where the catalyst layer 40, 50 contains two or more $Al_2O_3$ sources, the total content of Al derived from the two or more $Al_2O_3$ sources in terms of $Al_2O_3$.

Each $Al_2O_3$ source is not particularly limited as long as it is an oxide containing Al. Each $Al_2O_3$ source can be selected from, for example, an Al-based oxide, a Ce-based oxide containing Al, a Ce-Zr-based complex oxide containing Al, an alumina binder, and the like.

The catalyst layer 40, 50 preferably contains an Al-based oxide as an $Al_2O_3$ source. The catalyst layer 40, 50 may contain, in addition to the Al-based oxide, one other $Al_2O_3$ source or two or more other $Al_2O_3$ sources. In one embodiment, the catalyst layer 40, 50 contains an Al-based oxide and an alumina binder as $Al_2O_3$ sources.

From the viewpoint of improving the exhaust gas purification performance of the catalyst 1A, the proportion of the mass of Al derived from the Al-based oxide in terms of $Al_2O_3$ to the mass of Al in terms of $Al_2O_3$ in the catalyst layer 40, 50 is preferably 50% by mass or more, more preferably 60% by mass or more, still more preferably 70% by mass or more, and still more preferably 80% by mass or more. The upper limit is 100% by mass.

The content of Al in terms of $Al_2O_3$ in the catalyst layer 40, 50 can be determined in the same manner as the content of Al in terms of $Al_2O_3$ in the first catalyst layer 20.

Among components in the catalyst layer 40, 50, Ce primarily contributes to the oxygen storage capacity. Therefore, from the viewpoint of improving the exhaust gas purification performance of the catalyst 1A, the content of Ce in terms of $CeO_2$ in the catalyst layer 40, 50 is preferably 0.1% by mass or more, more preferably 1% by mass or more, still more preferably 3% by mass or more, and still more preferably 5% by mass or more, based on the mass of the catalyst layer 40, 50. The upper limit can be appropriately adjusted in consideration of the content of other components in the catalyst layer 40, 50. The content of Ce in terms of $CeO_2$ in the catalyst layer 40, 50 can be adjusted to, for example, 90% by mass or less, 80% by mass or less, 70% by mass or less, or 60% by mass or less, based on the mass of the catalyst layer 40, 50. Each of these upper limits may be combined with any of the above-described lower limits. The expression "the content of Ce in terms of $CeO_2$ in the catalyst layer 40, 50" means, in the case where the catalyst layer 40, 50 contains one Ce source, the content of Ce derived from the one Ce source in terms of $CeO_2$, and means, in the case where the catalyst layer 40, 50 contains two or more Ce sources, the total content of Ce derived from the two or more Ce sources in terms of $CeO_2$.

Each Ce source is not particularly limited as long as it is an oxide containing Ce. Each Ce source can be selected from, for example, an Al-based oxide containing Ce, a Ce-based oxide, a Ce-Zr-based complex oxide, a ceria binder, and the like. The Ce-Zr complex oxide is preferred.

From the viewpoint of improving the exhaust gas purification performance of the catalyst 1A, the proportion of the mass of Ce derived from the Ce-Zr-based complex oxide in terms of $CeO_2$ to the mass of Ce in terms of $CeO_2$ in the catalyst layer 40, 50 is preferably 50% by mass or more, more preferably 70% by mass or more, still more preferably 80% by mass or more, and still more preferably 90% by mass or more. The upper limit is 100% by mass.

The content of Ce in terms of $CeO_2$ in the catalyst layer 40, 50 can be determined in the same manner as the content of Ce in terms of $CeO_2$ in the first catalyst layer 20.

<< Second embodiment >>

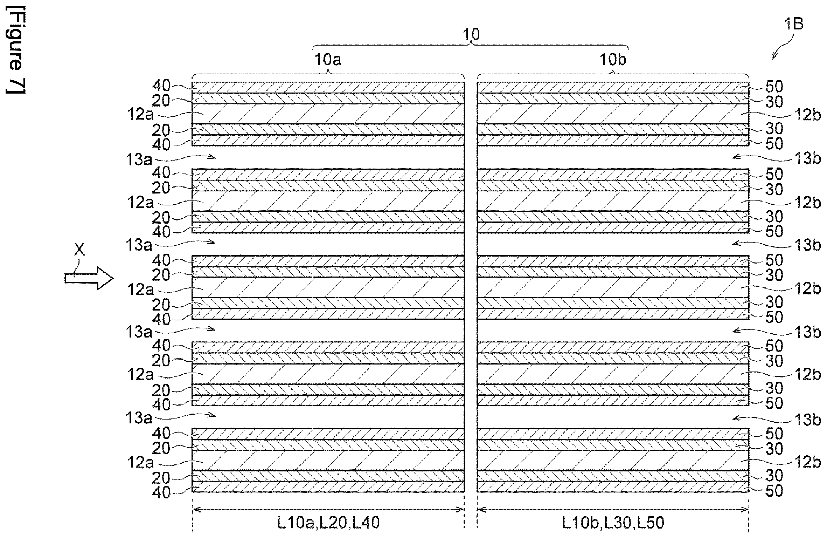

Hereinafter, an exhaust gas purification catalyst 1B according to a second embodiment of the present invention (hereinafter, referred to as a "catalyst 1B") will be described with reference to Figure 7.

In the catalyst 1B, the same members as those of the catalyst 1A are denoted by the same reference signs as those of the catalyst 1A. Unless otherwise specified, the above descriptions with respect to the catalyst 1A are also applied to the catalyst 1B.

The catalyst 1B differs from the catalyst 1A in that in the catalyst 1B, the first substrate part 10a and the second substrate part 10b are separately formed, whereas in the catalyst 1A, the first substrate part 10a and the second substrate part 10b are integrally formed.

The present invention encompasses an embodiment wherein the substrate 10 is composed of a single substrate, as in the catalyst 1A, and an embodiment wherein the substrate 10 is composed of two substrates, as in the catalyst 1B.

As shown in Figure 7, each of the first substrate part 10a and the second substrate part 10b is disposed in the exhaust gas path in the exhaust pipe P so that the axial directions of the first substrate part 10a and the second substrate part 10b coincide or roughly coincide with the exhaust gas flow direction X.

As shown in Figure 7, the axial direction of the first substrate part 10a may coincident or roughly coincident with the axial direction of the second substrate part 10b.

As shown in Figure 7, a gap is formed between the end on the exhaust gas outflow side of the first substrate part 10a and the end on the exhaust gas inflow side of the second substrate part 10b. The distance between the end on the exhaust gas outflow side of the first substrate part 10a and the end on the exhaust gas inflow side of the second substrate part 10b is, for example, 5 to 1000 mm.

The expression that "the substrate 10 extends in the exhaust gas flow direction X" encompasses an embodiment wherein a gap is formed between the end on the exhaust gas outflow side of the first substrate part 10a and the end on the exhaust gas inflow side of the second substrate part 10b, and wherein the axial directions of the first substrate part 10a and the second substrate part 10b coincide or roughly coincide with the exhaust gas flow direction X.

The end on the exhaust gas outflow side of the first substrate part 10a may be in contact with the end on the exhaust gas inflow side of the second substrate part 10b. In this case, the arrangement of the first substrate part 10a and the second substrate part 10b may, for example, be the same as the arrangement shown in Figure 6.

< Production of Catalyst >

Each of the catalysts 1A and 1B can be produced by forming the first catalyst layer 20 on the first substrate part 10a, forming the second catalyst layer 30 on the second substrate part 10b, forming the third catalyst layer 40 on the first catalyst layer 20, and forming the fourth catalyst layer 50 on the second catalyst layer 30.

After forming the first catalyst layer 20 and the second catalyst layer 30 on the first substrate part 10a and the second substrate part 10b, respectively, it is possible to form the third catalyst layer 40 and the fourth catalyst layer 50 on the first catalyst layer 20 and the second catalyst layer 30, respectively. After forming the first catalyst layer 20 on the first substrate part 10a and forming the third catalyst layer 40 on the first catalyst layer 20, it is possible to form the second catalyst layer 30 on the second substrate part 10b, and form the fourth catalyst layer 50 on the second catalyst layer 30.

In the case where the first substrate part 10a and the second substrate part 10b are integrally formed, or the case where the first substrate part 10a and the second substrate part 10b are separately formed and the end on the exhaust gas outflow side of the first substrate part 10a is in contact with the end on the exhaust gas inflow side of the second substrate part 10b, it is possible to form the first catalyst layer 20 on the first substrate part 10a and then form the second catalyst layer 30 on the second substrate part 10b, or to form the second catalyst layer 30 on the second substrate part 10b and then form the first catalyst layer 20 on the first substrate part 10a. In the former case, the end on the exhaust gas inflow side of the second catalyst layer 30 may have a portion that overlaps with the end on the exhaust gas outflow side of the first catalyst layer 20 (i.e., a portion that is located on the upside of the end on the exhaust gas outflow side of the first catalyst layer 20 and covers the end on the exhaust gas outflow side of the first catalyst layer 20). In the latter case, the end on the exhaust gas outflow side of the first catalyst layer 20 may have a portion that overlaps with the end on the exhaust gas inflow side of the second catalyst layer 30 (i.e., a portion that is located on the upside of the end on the exhaust gas inflow side of the second catalyst layer 30 and covers the end on the exhaust gas inflow side of the second catalyst layer 30).

The first catalyst layer 20 can be formed by mixing a supply source of a noble metal element (e.g., a salt of a noble metal element such as Pd or Pt) and a Ce-Zr-based complex oxide and optionally other component(s) (e.g., an inorganic oxide other than the Ce-Zr-based complex oxide, a binder such as an alumina binder, a solvent, and the like) to prepare a slurry for forming the first catalyst layer, coating the first substrate part 10a with the slurry for forming the first catalyst layer, drying the resulting material, and calcining the resulting material.

The second catalyst layer 30 can be formed by mixing a supply source of a noble metal element (e.g., a salt of a noble metal element such as Pd or Pt), a supply source of $Al_2O_3$ (e.g., an Al-based oxide, a Ce-based oxide containing Al, a Ce-Zr-based complex oxide containing Al, an alumina binder, or the like), and optionally other component(s) (e.g., an inorganic oxide other than the supply source of $Al_2O_3$, a binder other than alumina binder, a solvent, and the like) to prepare a slurry for forming the second catalyst layer, coating the second substrate part 10b with the slurry for forming the second catalyst layer, drying the resulting material, and calcining the resulting material.

The third catalyst layer 40 can be formed by mixing a supply source of a noble metal element (e.g., a salt of a noble metal element such as Rh) and optionally other component(s) (e.g., an inorganic oxide, a binder, a solvent, and the like) to prepare a slurry for forming the third catalyst layer, coating the first catalyst layer 20 with the slurry for forming the third catalyst layer, drying the resulting material, and calcining the resulting material.

The fourth catalyst layer 50 can be formed by mixing a supply source of a noble metal element (e.g., a salt of a noble metal element such as Rh) and optionally other component(s) (e.g., an inorganic oxide, a binder, a solvent, and the like) to prepare a slurry for forming the fourth catalyst layer, coating the second catalyst layer 30 with the slurry for forming the fourth catalyst layer, drying the resulting material, and calcining the resulting material.

In the case where the end on the exhaust gas outflow side of the third catalyst layer 40 is continuous with the end on the exhaust gas inflow side of the fourth catalyst layer 50 (i.e., in the case where the third catalyst layer 40 and the fourth catalyst layer 50 are integrated to form a single catalyst layer), the third catalyst layer 40 and the fourth catalyst layer 50 can be formed by mixing a supply source of a noble metal element (e.g., a salt of a noble metal element such as Rh) and other component(s) (e.g., an inorganic oxide, a binder, a solvent, and the like) to prepare a slurry for forming the third and fourth catalyst layers, coating the first catalyst layer 20 and the second catalyst layer 30 with the slurry for forming the third and fourth catalyst layers, drying the resulting materials, and calcining the resulting materials.

Examples of the salt of the noble metal element include a nitrate, an ammine complex salt, an acetate, a chloride or the like. Examples of the binder include alumina sol, zirconia sol, titania sol, silica sol, ceria sol, and the like. Examples of the solvent include water, an organic solvent, and the like.

The drying temperature is, for example, 60°C or more and 150°C or less, and the drying time is, for example, 0.1 hour or more and 1 hour or less. The calcination temperature is, for example, 300°C or more and 700°C or less, and the calcination time is, for example, 1 hour or more and 10 hours or less. Calcining may be performed, for example, in an air atmosphere.

**EXAMPLES**

< **Example** 1 >

(1) Preparation of slurry for forming first catalyst layer

To pure water, 1.1 parts by weight of a palladium nitrate aqueous solution in terms of Pd metal, 77.0 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 7.7 parts by weight of $La_2O_3$-modified alumina (the content of $La_2O_3$: 1% by mass), 6.1 parts by weight of barium hydroxide in terms of oxide, and 8.1 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.1% by mass of Pd in terms of metal, 34.7% by mass of Ce in terms of $CeO_2$, and 11.7% by mass of Al in terms of $Al_2O_3$, based on the mass of the first catalyst layer after calcining (100% by mass).

(2) Preparation of slurry for forming second catalyst layer

To pure water, 0.1 parts by weight of a palladium nitrate aqueous solution in terms of Pd metal, 69.8 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 15.3 parts by weight of $La_2O_3$-modified alumina (the content of $La_2O_3$: 1% by mass), 6.1 parts by weight of barium hydroxide in terms of oxide, and 8.7 parts by weight of a binder containing alumina sol in terms of solid content (the content of $Al_2O_3$ in solid content: 47% by mass) were added, and the resulting mixture was mixed and stirred to prepare a slurry for forming the second catalyst layer. The slurry for forming the second catalyst layer contained 0.1% by mass of Pd in terms of metal, 31.4% by mass of Ce in terms of $CeO_2$, and 19.2% by mass of Al in terms of $Al_2O_3$, based on the mass of the second catalyst layer after calcining (100% by mass). The ratio of the mass content of Al in terms of $Al_2O_3$ in the second catalyst layer to the mass content of the noble metal element in terms of metal in the second catalyst layer is 192.

(3) Formation of first catalyst layer and second catalyst layer

As a flow-through type substrate, a honeycomb porous substrate made of cordierite with cells extending in the axial direction and divided by a partition wall having a thickness of 50 to 70 $\mu$m (length in the axial direction: 80 mm, outer diameter: 93 mm, volume: 0.54 L, cell density: 900 cells/inch$^2$, manufactured by NGK INSULATORS, LTD.) was prepared.
The slurry for forming the first catalyst layer was applied to the upstream side of the flow-through type substrate by immersing the portion of the flow-through type substrate, which extends from the upstream end to a position 30 mm in the exhaust gas flow direction X, in the slurry for forming the first catalyst layer. Then, the slurry for forming the second catalyst layer was applied to the downstream side of the flow-through type substrate by immersing the portion of the flow-through type substrate, which extends from the downstream end to a position 50 mm in the exhaust gas flow direction X, in the slurry for forming the second catalyst layer. Subsequently, the flow-through type substrate coated with the slurry for forming the first catalyst layer and the slurry for forming the second catalyst layer was dried at 90°C, and then calcined at 450°C. As a result, the first catalyst layer and the second catalyst layer were formed on the flow-through type substrate without gaps in the exhaust gas flow direction X. The mass (washcoat amount) of the first catalyst layer per unit volume of the portion of the flow-through type substrate provided with the first catalyst layer was 130 g/L. The mass (washcoat amount) of the second catalyst layer per unit volume of the portion of the flow-through type substrate provided with the second catalyst layer was 130 g/L. Note that the washcoat amount means the mass of the catalyst layer after calcining.

(4) Preparation of slurry for forming the third and fourth catalyst layers

To pure water, 0.1 parts by weight of a dinitrodiamineplatinum(II) solution in terms of Pt metal, 0.2 parts by weight of a rhodium nitrate aqueous solution in terms of Rh metal, 44.6 parts by weight of a Ce-Zr-based complex oxide (the content of Ce in terms of $CeO_2$: 15% by mass), 44.6 parts by weight of $La_2O_3$-modified alumina (the content of $La_2O_3$: 1% by mass), 0.5 parts by weight of barium hydroxide in terms of oxide, and 10 parts by weight of a binder containing alumina sol in terms of solid content (the content of $Al_2O_3$ in solid content: 100% by mass) were added, and the resulting mixture was mixed and stirred to prepare a slurry for forming the third and fourth catalyst layers. The slurry for forming the third and fourth catalyst layers contained 0.1% by mass of Pt in terms of metal, 0.2% by mass of Rh in terms of metal, 6.7% by mass of Ce in terms of $CeO_2$, and 54.2% by mass of Al in terms of $Al_2O_3$, based on the respective masses of the third catalyst layer and the fourth catalyst layer after calcining (100% by mass).

(5) Formation of third catalyst layer and fourth catalyst layer

The slurry for forming the third and fourth catalyst layers was applied to the entirety of the flow-through type substrate provided with the first catalyst layer and the second catalyst layer by immersing the entirety of the flow-through type substrate provided with the first catalyst layer and the second catalyst layer in the slurry for forming the third and fourth catalyst layers. Subsequently, the flow-through type substrate coated with the slurry for forming the third and fourth catalyst layers was dried at 90°C, and then calcined at 450°C. As a result, the third catalyst layer and the fourth catalyst layer were formed on the first catalyst layer and the second catalyst layer, respectively, without gaps in the exhaust gas flow direction X (i.e., the end on the exhaust gas outflow side of the third catalyst layer was continuous with the end on the exhaust gas inflow side of the fourth catalyst layer, so that the third catalyst layer and the fourth catalyst layer were integrated to form a single catalyst layer). The mass (washcoat amount) of the third catalyst layer per unit volume of the portion of the substrate provided with the third catalyst layer was 100 g/L, the mass (washcoat amount) of the fourth catalyst layer per unit volume of the portion of the substrate provided with the fourth catalyst layer was 100 g/L, and the total mass (washcoat amount) of the third catalyst layer and the fourth catalyst layer, relative to the total volume of the portion of the substrate provided with the third catalyst layer and the portion of the substrate provided with the fourth catalyst layer, was 100 g/L. Note that the washcoat amount means the mass of the catalyst layer after calcining.
As described above, an exhaust gas purification catalyst of Example 1 was produced, including: the flow-through type substrate; the first catalyst layer provided on the upstream side of the flow-through type substrate; the second catalyst layer provided on the downstream side of the flow-through type; the third catalyst layer provided on the upside of the first catalyst layer; and the fourth catalyst layer provided on the upside of the second catalyst layer. In the exhaust gas purification catalyst of Example 1, the ratio of the mass content of Al in terms of $Al_2O_3$ in the first catalyst layer (11.7% by mass) to the mass content of Al in terms of $Al_2O_3$ in the second catalyst layer (19.2% by mass) was 0.61. The ratio of the mass of the first catalyst layer per unit volume of the portion of the substrate provided with the first catalyst layer (130 g/L) to the mass of the second catalyst layer per unit volume of the portion of the substrate provided with the second catalyst layer (130 g/L) was 1.00.

### < Example 2 >

(1) Preparation of slurry for forming first catalyst layer

To pure water, 1.1 parts by weight of a palladium nitrate aqueous solution in terms of Pd metal, 84.7 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 6.1 parts by weight of barium hydroxide in terms of oxide, and 8.1 parts by weight of a binder containing alumina sol in terms of solid content (the content of $Al_2O_3$ in solid content: 100% by mass) were added, and the resulting mixture was mixed and stirred to prepare a slurry for forming the first catalyst layer. The slurry for forming the first catalyst layer contained 1.1% by mass of Pd in terms of metal, 38.1% by mass of Ce in terms of $CeO_2$, and 8.1% by mass of Al in terms of $Al_2O_3$, based on the mass of the first catalyst layer after calcining (100% by mass).
An exhaust gas purification catalyst of Example 2 was produced in the same manner as in Example 1, except that the slurry for forming the first catalyst layer produced in (1) above was used. In the exhaust gas purification catalyst of Example 2, the ratio of the mass content of Al in terms of $Al_2O_3$ in the first catalyst layer (8.1% by mass) to the mass content of Al in terms of $Al_2O_3$ in the second catalyst layer (19.2% by mass) was 0.42. The ratio of the mass of the first catalyst layer per unit volume of the portion of the substrate provided with the first catalyst layer (130 g/L) to the mass of the second catalyst layer per unit volume of the portion of the substrate provided with the second catalyst layer (130 g/L) was 1.00.

### < Example 3 >

(1) Preparation of slurry for forming first catalyst layer

To pure water, 1.1 parts by weight of a palladium nitrate aqueous solution in terms of Pd metal, 84.7 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 6.1 parts by weight of barium hydroxide in terms of oxide, and 8.1 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.1% by mass of Pd in terms of metal, 38.1% by mass of Ce in terms of $CeO_2$, and 4.1% by mass of Al in terms of $Al_2O_3$, based on the mass of the first catalyst layer after calcining (100% by mass).
An exhaust gas purification catalyst of Example 3 was produced in the same manner as in Example 1, except that the slurry for forming the first catalyst layer produced in (1) above was used. In the exhaust gas purification catalyst of Example 3, the ratio of the mass content of Al in terms of $Al_2O_3$ in the first catalyst layer (4.1% by mass) to the mass content of Al in terms of $Al_2O_3$ in the second catalyst layer (19.2% by mass) was 0.21. The ratio of the mass of the first catalyst layer per unit volume of the portion of the substrate provided with the first catalyst layer (130 g/L) to the mass of the second catalyst layer per unit volume of the portion of the substrate provided with the second catalyst layer (130 g/L) was 1.00.

### < Example 4 >

(1) Preparation of slurry for forming first catalyst layer

To pure water, 1.1 parts by weight of a palladium nitrate aqueous solution in terms of Pd metal, 84.7 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 6.1 parts by weight of barium hydroxide in terms of oxide, and 8.1 parts by weight of a binder without alumina sol in terms of solid content (the content of $Al_2O_3$ in solid content: 0.0% by mass) were added, and the resulting mixture was mixed and stirred to prepare a slurry for forming the first catalyst layer. The slurry for forming the first catalyst layer contained 1.1% by mass of Pd in terms of metal and 38.1% by mass of Ce in terms of $CeO_2$, based on the mass of the first catalyst layer after calcining (100% by mass).
An exhaust gas purification catalyst of Example 4 was produced in the same manner as in Example 1, except that the slurry for forming the first catalyst layer produced in (1) above was used. In the exhaust gas purification catalyst of Example 4, the ratio of the mass content of Al in terms of $Al_2O_3$ in the first catalyst layer (0.00% by mass) to the mass content of Al in terms of $Al_2O_3$ in the second catalyst layer (19.2% by mass) was 0.00. The ratio of the mass of the first catalyst layer per unit volume of the portion of the substrate provided with the first catalyst layer (130 g/L) to the mass of the second catalyst layer per unit volume of the portion of the substrate provided with the second catalyst layer (130 g/L) was 1.00.

< **Example 5** >

(1) Preparation of slurry for forming first catalyst layer

To pure water, 1.2 parts by weight of a palladium nitrate aqueous solution in terms of Pd metal, 83.5 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 6.6 parts by weight of barium hydroxide in terms of oxide, and 8.7 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.2% by mass of Pd in terms of metal, 37.6% by mass of Ce in terms of $CeO_2$, and 4.4% by mass of Al in terms of $Al_2O_3$, based on the mass of the first catalyst layer after calcining (100% by mass).

An exhaust gas purification catalyst of Example 5 was produced in the same manner as in Example 1, except that the slurry for forming the first catalyst layer produced in (1) above was used, and that the mass (washcoat amount) of the first catalyst layer per unit volume of the portion of the substrate provided with the first catalyst layer was 120 g/L. In the exhaust gas purification catalyst of Example 5, the ratio of the mass content of Al in terms of $Al_2O_3$ in the first catalyst layer (4.4% by mass) to the mass content of Al in terms of $Al_2O_3$ in the second catalyst layer (19.2% by mass) was 0.23. The ratio of the mass of the first catalyst layer per unit volume of the portion of the substrate provided with the first catalyst layer (120 g/L) to the mass of the second catalyst layer per unit volume of the portion of the substrate provided with the second catalyst layer (130 g/L) was 0.92.

< **Comparative Example 1** >

(1) Preparation of slurry for forming first catalyst layer

To pure water, 1.1 parts by weight of a palladium nitrate aqueous solution in terms of Pd metal, 69.5 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 15.2 parts by weight of $La_2O_3$-modified alumina (the content of $La_2O_3$: 1% by mass), 6.1 parts by weight of barium hydroxide in terms of oxide, and 8.1 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.1% by mass of Pd in terms of metal, 31.3% by mass of Ce in terms of $CeO_2$, and 19.1% by mass of Al in terms of $Al_2O_3$, based on the mass of the first catalyst layer after calcining (100% by mass).

An exhaust gas purification catalyst of Comparative Example 1 was produced in the same manner as in Example 1, except that the slurry for forming the first catalyst layer produced in (1) above was used. In the exhaust gas purification catalyst of Comparative Example 1, the ratio of the mass content of Al in terms of $Al_2O_3$ in the first catalyst layer (19.1% by mass) to the mass content of Al in terms of $Al_2O_3$ in the second catalyst layer (19.2% by mass) was 0.99.

< **Comparative Example 2** >

(1) Preparation of slurry for forming first catalyst layer

To pure water, 1.1 parts by weight of a palladium nitrate aqueous solution in terms of Pd metal, 84.7 parts by weight of a carrier other than a Ce-Zr-based complex oxide (the content of Ce in terms of $CeO_2$: 0% by mass, the content of Zr in terms of $ZrO_2$: 83% by mass, the content of one or two or more rare earth elements other than Ce in terms of oxide: 17% by mass), 6.1 parts by weight of barium hydroxide in terms of oxide, and 8.2 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.1% by mass of Pd in terms of metal, 0.0% by mass of Ce in terms of $CeO_2$, and 4.1% by mass of Al in terms of $Al_2O_3$, based on the mass of the first catalyst layer after calcining (100% by mass).

An exhaust gas purification catalyst of Comparative Example 2 was produced in the same manner as in Example 1, except that the slurry for forming the first catalyst layer produced in (1) above was used. In the exhaust gas purification catalyst of Comparative Example 2, the ratio of the mass content of Al in terms of $Al_2O_3$ in the first catalyst layer (4.1% by mass) to the mass content of Al in terms of $Al_2O_3$ in the second catalyst layer (19.2% by mass) was 0.21.

< Comparative Example 3 >

(1) Preparation of slurry for forming first catalyst layer

To pure water, 1.3 parts by weight of a palladium nitrate aqueous solution in terms of Pd metal, 67.2 parts by weight of a Ce-Zr-based complex oxide (the content of Ce in terms of $CeO_2$: 45% by mass, the content of Zr in terms of $ZrO_2$: 45% by mass, the content of one or two or more rare earth elements other than Ce in terms of oxide: 10% by mass), 14.8 parts by weight of $La_2O_3$-modified alumina (the content of $La_2O_3$: 1% by mass), 7.2 parts by weight of barium hydroxide in terms of oxide, and 9.5 parts by weight of a binder containing alumina sol in terms of solid content (the content of $Al_2O_3$ in solid content: 50% by mass) were added, and the resulting mixture was mixed and stirred to prepare a slurry for forming the first catalyst layer. The slurry for forming the first catalyst layer contained 1.3% by mass of Pd in terms of metal, 30.2% by mass of Ce in terms of $CeO_2$, and 19.4% by mass of Al in terms of $Al_2O_3$, based on the mass of the first catalyst layer after calcining (100% by mass).
An exhaust gas purification catalyst of Comparative Example 3 was produced in the same manner as in Example 1, except that the slurry for forming the first catalyst layer produced in (1) above was used, and that the mass (washcoat amount) of the first catalyst layer per unit volume of the portion of the substrate provided with the first catalyst layer was 110 g/L. In the exhaust gas purification catalyst of Comparative Example 3, the ratio of the mass content of Al in terms of $Al_2O_3$ in the first catalyst layer (19.2% by mass) to the mass content of Al in terms of $Al_2O_3$ in the second catalyst layer (19.4% by mass) was 1.01. The ratio of the mass of the first catalyst layer per unit volume of the portion of the substrate provided with the first catalyst layer (110 g/L) to the mass of the second catalyst layer per unit volume of the portion of the substrate provided with the second catalyst layer (130 g/L) was 0.85.

< Test Example >

(1) Aging Treatment

Each of the exhaust gas purification catalysts of Examples 1 to 5 and Comparative Examples 1 to 3 was installed in an exhaust pipe, the exhaust pipe was set in a gasoline engine, the engine speed/torque and the like were adjusted so that the catalyst temperature reached 950°C, and the aging treatment was performed for 50 hours.

(2) Evaluation of Exhaust Gas Purification Performance

A vehicle in which the exhaust gas purification catalyst after the aging treatment was installed was driven under the driving conditions of Worldwide Harmonized Light Vehicles Test Cycle (WLTC). The emission quantities (emission levels) of carbon monoxide (CO), non-methane hydrocarbons (NMHC), and nitrogen oxides (NOx) in the exhaust gas which had passed through the exhaust gas purification catalyst were measured, and the emission quantities of CO, NMHC, and NOx per unit distance driven (mg/km) were determined. A gasoline vehicle was used as the test vehicle, certified test fuel was used as the gasoline, and an exhaust gas analyzer manufactured by HORIBA, Ltd. was used as the exhaust gas analyzer. The emission quantity of NMHC per unit distance driven (g/km) is shown in Table 1. In Table 1, (A) represents the mass content of Al in terms of $Al_2O_3$ in the first catalyst layer (% by mass); (B) represents the mass content of Al in terms of $Al_2O_3$ in the second catalyst layer (% by mass); (C) represents the mass of the first catalyst layer per unit volume of the portion of the substrate provided with the first catalyst layer (g/L); (D) represents the mass of the second catalyst layer per unit volume of the portion of the substrate provided with the second catalyst layer (g/L); (E) represents the ratio of the mass content of Al in terms of $Al_2O_3$ in the first catalyst layer to the mass content of Al in terms of $Al_2O_3$ in the second catalyst layer; (F) represents the ratio of the mass of the first catalyst layer per unit volume of the portion of the substrate provided with the first catalyst layer to the mass of the second catalyst layer per unit volume of the portion of the substrate provided with the second catalyst layer; (G) represents the presence or absence of Ce-Zr-based complex oxide in the first catalyst layer; and (H) represents the emission quantity of NMHC per unit distance driven (g/km).

[Table 1]

Table 1

| | (A) | (B) | (C) | (D) | (E) | (F) | (G) | (H) |
|---|---|---|---|---|---|---|---|---|
| Example1 | 11.7 | 19.2 | 130 | 130 | 0.61 | 1.00 | Presence | 0.878 |
| Example2 | 8.1 | 19.2 | 130 | 130 | 0.42 | 1.00 | Presence | 0.853 |
| Example3 | 4.1 | 19.2 | 130 | 130 | 0.21 | 1.00 | Presence | 0.835 |
| Example4 | 0 | 19.2 | 130 | 130 | 0.00 | 1.00 | Presence | 0.834 |
| Example5 | 4.4 | 19.2 | 120 | 130 | 0.23 | 0.92 | Presence | 0.819 |
| Comparative Example 1 | 19.1 | 19.2 | 130 | 130 | 0.99 | 1.00 | Presence | 0.882 |
| Comparative Example 2 | 4.1 | 19.2 | 130 | 130 | 0.21 | 1.00 | Absence | 0.921 |
| Comparative Example 3 | 19.4 | 19.2 | 110 | 130 | 1.01 | 0.85 | Presence | 0.965 |

(A): Mass content of Al in terms of $Al_2O_3$ in first catalyst layer (% by mass)
(B): Mass content of Al in terms of $Al_2O_3$ in second catalyst layer (% by mass)
(C): Mass of first catalyst layer per unit volume of portion of substrate provided with first catalyst layer (g/L)
(D): Mass of second catalyst layer per unit volume of portion of substrate provided with second catalyst layer (g/L)
(E): Ratio of mass content of Al in terms of $Al_2O_3$ in first catalyst layer to mass content of Al in terms of $Al_2O_3$ in second catalyst layer
(F): Ratio of mass of first catalyst layer per unit volume of portion of substrate provided with first catalyst layer to mass of second catalyst layer per unit volume of portion of substrate provided with second catalyst layer
(G): Presence or absence of Ce-Zr-based complex oxide in first catalyst layer
(H): Emission quantity of NMHC per unit distance driven (g/km)

The exhaust gas purification catalysts of Example 1 to 5 include the substrate, the first catalyst layer provided on the upstream side of the substrate, and the second catalyst layer provided on the downstream side of the substrate, wherein the first catalyst layer contains the noble metal element and the Ce-Zr-based complex oxide, wherein the second catalyst layer contains the noble metal element and $Al_2O_3$, wherein the mass content of Al in terms of $Al_2O_3$ in the first catalyst layer is 12% by mass or less, and wherein the ratio of the mass content of Al in terms of $Al_2O_3$ in the first catalyst layer to the mass content of Al in terms of $Al_2O_3$ in the second catalyst layer is 0 or more and 0.65 or less.

The exhaust gas purification catalysts of Comparative Examples 1 and 3 include the substrate, the first catalyst layer provided on the upstream side of the substrate, and the second catalyst layer provided on the downstream side of the substrate, wherein the first catalyst layer contains the noble metal element and the Ce-Zr-based complex oxide, and wherein the second catalyst layer contains the noble metal element and $Al_2O_3$. However, in the exhaust gas purification catalysts of Comparative Examples 1 and 3, the mass content of Al in terms of $Al_2O_3$ in the first catalyst layer is more than 12% by mass, and the ratio of the mass content of Al in terms of $Al_2O_3$ in the first catalyst layer to the mass content of Al in terms of $Al_2O_3$ in the second catalyst layer is more than 0.65.

The exhaust gas purification catalyst of Comparative Example 2 includes the substrate, the first catalyst layer provided on the upstream side of the substrate, and the second catalyst layer provided on the downstream side of the substrate, wherein the first catalyst layer contains the noble metal element, wherein the second catalyst layer contains the noble metal element and $Al_2O_3$, wherein the mass content of Al in terms of $Al_2O_3$ in the first catalyst layer is 12% by mass or less, and wherein the ratio of the mass content of Al in terms of $Al_2O_3$ in the first catalyst layer to the mass content of Al in terms of $Al_2O_3$ in the second catalyst layer is 0 or more and 0.65 or less. However, in the exhaust gas purification catalyst of Comparative Example 2, the first catalyst layer contains no Ce-Zr-based complex oxide.

As shown in Table 1, the exhaust gas purification catalysts of Examples 1 to 5, which satisfy the conditions that the mass content of Al in terms of $Al_2O_3$ in the first catalyst layer is 12% by mass or less; and that the ratio of the mass content of $Al_2O_3$ in the first catalyst layer to the mass content of $Al_2O_3$ in the second catalyst layer is 0 or more and 0.65 or less, exhibited higher exhaust gas purification performance compared to the exhaust gas purification catalysts of Comparative Examples 1 to 3, which do not satisfy the above conditions. Further, the exhaust gas purification catalysts of Examples 1 to 5, in which the first catalyst layer contains the Ce-Zr-based complex oxide, exhibited higher exhaust gas purification performance compared to the exhaust gas purification catalyst of Comparison Example 2, in which the first catalyst layer contains no Ce-Zr-based complex oxide.

DESCRIPTION OF REFERENCE SIGNS

| | |
|---|---|
| 1A, 1B | Exhaust gas purification catalyst |
| 10 | Substrate |
| 10a | First substrate part |
| 10b | Second substrate part |
| 11a, 11b | Tubular member |
| 12a, 12b | Partition wall |
| 13a, 13b | Cells |
| 20 | First catalyst layer |
| 30 | Second catalyst layer |
| 40 | Third catalyst layer |
| 50 | Fourth catalyst layer |
| L10a | Length of first substrate part |
| L10b | Length of second substrate part |
| L20 | Average length of first catalyst layer |
| L30 | Average length of second catalyst layer |
| L40 | Average length of third catalyst layer |
| L50 | Average length of fourth catalyst layer |
| P | Exhaust pipe of internal combustion engine |

**Claims**

1. An exhaust gas purification catalyst, comprising a substrate, a first catalyst layer provided on an upstream side of the substrate, and a second catalyst layer provided on a downstream side of the substrate,

   wherein the first catalyst layer comprises a noble metal element and a Ce-Zr-based complex oxide,
   wherein the second catalyst layer comprises a noble metal element and $Al_2O_3$,
   wherein a mass content of Al in terms of $Al_2O_3$ in the first catalyst layer is 12% by mass or less, and
   wherein a ratio of the mass content of Al in terms of $Al_2O_3$ in the first catalyst layer to a mass content of Al in terms of $Al_2O_3$ in the second catalyst layer is 0 or more and 0.65 or less.

2. The exhaust gas purification catalyst as claimed in claim 1, wherein a ratio of a mass of the first catalyst layer per unit volume of a portion of the substrate provided with the first catalyst layer to a mass of the second catalyst layer per unit volume of a portion of the substrate provided with the second catalyst layer is 0.95 or less.

3. The exhaust gas purification catalyst as claimed in claim 1 or 2, wherein each of the first catalyst layer and the second catalyst layer comprises Pd and/or Pt.

4. The exhaust gas purification catalyst as claimed in claim 3, wherein the exhaust gas purification catalyst further comprises a third catalyst layer provided on an upside of the first catalyst layer and /or a fourth catalyst layer provided on an upside of the second catalyst layer, and wherein each of the third catalyst layer and the fourth catalyst layer comprises Rh.

5. The exhaust gas purification catalyst as claimed in claim 1 or 2, wherein the first catalyst layer comprises Pd.

6. The exhaust gas purification catalyst as claimed in claim 1 or 2, wherein a ratio of the mass content of Al in terms of $Al_2O_3$ in the second catalyst layer to a mass content of the noble metal element in terms of metal in the second catalyst layer is 50 or more and 600 or less.

7. The exhaust gas purification catalyst as claimed in claim 1 or 2, wherein a mass content of Ce in terms of $CeO_2$ in the first catalyst layer is 32% by mass or more.

[Figure 1]

[Figure 2]

[Figure 3]

[Figure 4]

[Figure 5]

[Figure 6]

[Figure 7]

## INTERNATIONAL SEARCH REPORT

International application No.

**PCT/JP2024/008535**

**A.    CLASSIFICATION OF SUBJECT MATTER**

***B01J 23/63***(2006.01)i; ***B01D 53/94***(2006.01)i; ***B01J 35/57***(2024.01)i; ***F01N 3/10***(2006.01)i; ***F01N 3/28***(2006.01)i
FI:    B01J23/63 A ZAB; B01J35/57 L; B01D53/94 222; B01D53/94 245; B01D53/94 280; F01N3/28 301Q; F01N3/10 A

According to International Patent Classification (IPC) or to both national classification and IPC

**B.    FIELDS SEARCHED**

Minimum documentation searched (classification system followed by classification symbols)

B01J21/00-38/74; B01D53/94; F01N3/10; F01N3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-086199 A (TOYOTA JIDOSHA KABUSHIKI KAISHA) 10 May 2012 (2012-05-10) claims, paragraphs [0010]-[0013], [0017], [0026], [0035], [0045], fig. 1, example 8 | 1, 3–7 |
| Y | | 2-7 |
| X | JP 2022-050754 A (CATALER CORP.) 31 March 2022 (2022-03-31) claims, paragraphs [0003], [0005]-[0014], [0028], [0035], [0044], [0049], [0054], [0055], [0063], [0070], [0071], fig. 3, examples | 1-7 |
| Y | | 2-7 |
| X | JP 2003-200049 A (NISSAN MOTOR CO., LTD.) 15 July 2003 (2003-07-15) claims, paragraphs [0007]-[0016], [0070], examples 1, 12, 13, 15, 18, 20, 22 | 1, 3, 5-7 |
| Y | | 2-7 |
| X | JP 2003-320222 A (VALTION TEKNILLINEN TUTKIMUSKESKUS) 11 November 2003 (2003-11-11) claims, paragraphs [0012]-[0014], examples 3-8, 10 | 1, 3, 5-7 |
| Y | | 2-3, 5-7 |

☑ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2024/008535** |

**C.** **DOCUMENTS CONSIDERED TO BE RELEVANT**

| Category* | Citation of document, with indication, where appropriate, of the relevant passages | Relevant to claim No. |
|---|---|---|
| X | JP 2005-095762 A (TOYOTA JIDOSHA KABUSHIKI KAISHA) 14 April 2005 (2005-04-14) claims, paragraphs [0009]-[0028], [0058], fig. 3, 4, 6, examples 1, 2, 4 | 1, 3, 5-7 |
| Y | | 2-3, 5-7 |
| Y | JP 2006-205002 A (TOYOTA JIDOSHA KABUSHIKI KAISHA) 10 August 2006 (2006-08-10) paragraphs [0008]-[0012], [0019], examples | 2-7 |

Form PCT/ISA/210 (second sheet) (July 2022)

**INTERNATIONAL SEARCH REPORT**
Information on patent family members

International application No.

**PCT/JP2024/008535**

| Patent document cited in search report | | | Publication date (day/month/year) | Patent family member(s) | | | Publication date (day/month/year) |
|---|---|---|---|---|---|---|---|
| JP | 2012-086199 | A | 10 May 2012 | US | 8835349 | B2 | |
| | | | | claims, column 2, line 45 to column 5, line 3, column 6, lines 25-40, column 8, lines 42-52, column 10, line 66 to column 11, line 18, column 13, lines 39, 40, fig. 1, example 8 | | | |
| | | | | WO | 2012/052828 | A1 | |
| | | | | EP | 2630347 | A1 | |
| | | | | CN | 103180559 | A | |
| JP | 2022-050754 | A | 31 March 2022 | US | 2024/0009621 | A1 | |
| | | | | claims, paragraphs [0003], [0009]-[0018], [0036], [0043], [0052], [0057], [0062], [0063], [0071], [0078], [0079], fig. 3, examples | | | |
| | | | | WO | 2022/059466 | A1 | |
| | | | | EP | 4205848 | A1 | |
| | | | | CN | 116209522 | A | |
| | | | | BR | 112023004685 | A | |
| JP | 2003-200049 | A | 15 July 2003 | US | 2003/0083193 | A1 | |
| | | | | claims, paragraphs [0010]-[0184], examples, fig. 2, 7, 8, 11, 12, 13 | | | |
| | | | | EP | 1308200 | A1 | |
| | | | | CN | 1415411 | A | |
| JP | 2003-320222 | A | 11 November 2003 | (Family: none) | | | |
| JP | 2005-095762 | A | 14 April 2005 | (Family: none) | | | |
| JP | 2006-205002 | A | 10 August 2006 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019136695 A